# EUROPÄISCHE PATENTSCHRIFT

(11) **EP 2 791 149 B1**
(45) Veröffentlichungstag und Bekanntmachung des Hinweises auf die Patenterteilung: **14.06.2017**
(21) Anmeldenummer: 12799074.5
(22) Anmeldetag: 08.12.2012
(51) Int. Cl.: C07F 9/30, C07F 9/48, C08K 5/5313

(54) **MISCHUNGEN VON DIPHOSPHINSÄUREN UND ALKYLPHOSPHINSÄUREN, EIN VERFAHREN ZU DEREN HERSTELLUNG UND IHRE VERWENDUNG**
MIXTURES OF DIPHOSPHINIC ACIDS AND ALKYLPHOSPHINIC ACIDS, A PROCESS FOR THE PREPARATION THEREOF AND THE USE THEREOF
MÉLANGES D'ACIDES DIPHOSPHINIQUES ET D'ACIDES ALKYLPHOSPHINIQUES, PROCÉDÉ POUR LEUR PRÉPARATION ET LEUR UTILISATION

(30) Priorität: 16.12.2011 DE 102011121590
(43) Veröffentlichungstag der Anmeldung: 22.10.2014
(73) Patentinhaber: Clariant International Ltd, 4132 Muttenz (CH)
(72) Erfinder: SCHNEIDER, Fabian, 69214 Eppelheim (DE); OSTEROD, Frank, 50933 Köln (DE); BAUER, Harald, 50170 Kerpen (DE); SICKEN, Martin, 51149 Köln (DE)
(74) Vertreter: Mikulecky, Klaus
(86) Internationale Anmeldenummer: PCT/EP2012/005076
(87) Internationale Veröffentlichungsnummer: WO 2013/087177

(56) Entgegenhaltungen:
- EP-A1- 1 217 003
- EP-A1- 1 217 004
- DE-A1-102007 032 669
- DATABASE REAXYS [Online] ELSEVIER; 1986, Nifant'ev et al: "Rx-ID: 1917897", XP002692078, Database accession no. 1917897 -& NIFANT'EV E E ET AL: "Reactions of acetylenes with hypophosphorous and phosphonous acids", JOURNAL OF GENERAL CHEMISTRY USSR, CONSULTANTS BUREAU, NEW YORK, NY, US, Bd. 56, Nr. 4, 20. September 1986 (1986-09-20), Seiten 680-688, XP002165520, ISSN: 0022-1279

## Beschreibung

Die Erfindung betrifft Mischungen von mindestens einer Diphosphinsäure und mindestens einer Alkylphosphinsäure, ein Verfahren zu deren Herstellung und ihre Verwendung.

Bei der Herstellung von Leiterplatten, die in zunehmenden Maß in verschiedenen Geräten, z. B. Computer, Kameras, Mobiltelefonen, LCD-, TFT-Bildschirmen und anderen Elektronikgeräten Verwendung finden, werden unterschiedliche Materialien, insbesondere Kunststoffe eingesetzt. Hierzu gehören vor allem Duroplaste, glasfaserverstärkte Duroplaste und Thermoplaste. Besonders oft werden wegen ihrer guten Eigenschaften Epoxidharze genutzt.

Gemäß den entsprechenden Normen (IPC-4101, Specification for Base Materials for Rigid ans Multilayer Printed Boards) müssen diese Leiterplatten flammwidrig bzw. flammfest ausgerüstet werden.

Die thermische Expansion von Leiterplatten stellt bei deren Herstellung ein Problem dar. Die Bedingungen der Elektronikfertigung von Leiterplatten verlangen, dass Leiterplatten hohe thermische Belastungen ohne Schädigungen oder Verformungen aushalten. Das Auftragen der Leiterbahnen (bleifreies Löten) auf Leiterplatten erfolgt bei Temperaturen bis ca. 260 °C. Daher ist es von Bedeutung, dass sich Leiterplatten unter thermischem Stress nicht verziehen und die Produkte maßhaltig bleiben.

Die thermische Expansion ist vor allem auch bereits bei Prepregs (Kurzform für preimpregnated fibres, das sind "vorimprägnierte Fasern") und Laminaten von Bedeutung, da diese die Rohformen bzw. Vorstufen von Leiterplatten darstellen. Es ist somit wichtig die thermische Expansion von Prüfkörpern zu minimieren, um ein gutes, maßhaltiges Produkt (beispielsweise eine fertige Leiterplatte) zu erhalten.

Die EP-A-1217004 beschreibt ein Verfahren zur Herstellung von Ethanbis(alkylphosphinsäuren) mittels eines mehrstufigen Verfahrens durch
a) Umsetzung von elementarem gelbem Phosphor mit Alkylhalogeniden in Gegenwart von Alkali- oder Erdalkalihydroxid zu einem Gemisch, welches als Hauptbestandteile die Alkali- und/oder Erdalkalisalze der Alkylphosphonigen, Phosphorigen und Hypophosphorigen Säure enthält, und
b) Freisetzung der Alkylphosphonigen, Phosphorigen und Hypophosphorigen Säure durch Zugabe von Mineralsäuren sowie gleichzeitiger Ausfällung der Alkali- bzw. Erdalkali-Ionen in Form ihrer Mineralsalze, wonach man
c) die alkylphosphonige Säure aus der Mischung der alkylphosphonigen, Phosphorigen und hypophosphorigen Säure verestert,
d) den Ester der alkylphosphonigen Säure aus der Mischung isoliert und zur alkylphosphonigen Säure verseift,
e) durch radikal-initiierte Umsetzung mit Alkinen aus der Alkylphosphonigen Säure die entsprechende Ethanbis(alkylphosphinsäure) der allgemeinen Formel (I), 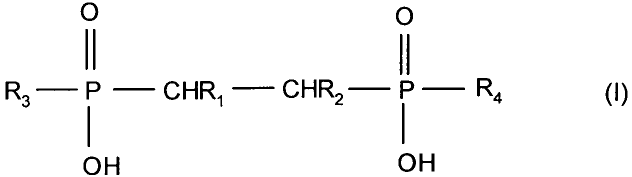 in der
   - R₁ und R₂: gleich oder verschieden sein können und für Wasserstoff, für eine Carboxylgruppe, für ein Carbonsäurederivat, für eine - ggf. substituierte - Alkylgruppe mit 1 bis 10 C-Atomen, für Phenyl, Benzyl oder für alkylsubstituierte Aromaten stehen,
   - R₃ und R₄: gleich oder verschieden sein können und für eine - ggf. substituierte - Alkylgruppe mit 2 bis 20 C-Atomen steht,
   herstellt.

Die EP-A-1217003 beschreibt ein Verfahren zur Herstellung von Ethanbis(methylphosphinsäure), bei dem Ethin (HC - CH) mit methylposphoniger Säure umgesetzt wird.

In der DE-A-102007032669 werden Alkylphosphonigsäuren, -salze und -ester der Formel A - P(= O)(Ox) - H sowie ein Verfahren zur Herstellung derselben beschrieben, in dem man eine Phosphonsäurequelle mit Olefinen in Gegenwart eines Katalysators umsetzt.

Bei A in der obigen Formel handelt es sich bevorzugt um C₂-C₂₀-Alkylgruppen und bei X um H, Alkyl und bestimmte Metalle.

Es ist Aufgabe der vorliegenden Erfindung, Kunststoffe für Prepregs, Leiterplatten und Laminate so auszurüsten, dass diese - wenn überhaupt - nur einer sehr geringen thermischen Expansion unterliegen und die Maßhaltigkeit erfüllt wird.
Diese Aufgabe wird gelöst durch Mischungen von mindestens einer Diphosphinsäure der Formel (I) 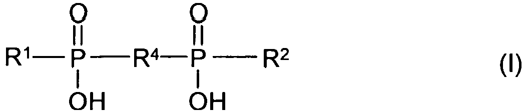 worin
- R⁴: Ethylen, Butylen, Hexylen oder Octylen bedeuten
mit mindestens einer Alkylphosphinsäure der Formel (II) 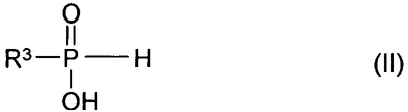 worin
R¹, R² und R³ gleich oder verschieden und Ethyl, n-Propyl, iso-Propyl, n-Butyl, iso-Butyl, tert.-Butyl, n-Pentyl, iso-Pentyl, n-Hexyl, iso-Hexyl und/oder Phenyl bedeuten. Die Mischungen 0,1 bis 99,9 Gew.-% Diphosphinsäure der Formel (I) und 99,9 bis 0,1 Gew.-% Alkylphosphinsäure der Formel (II).

In einer weiteren Ausführungsform enthalten die Mischungen 60 bis 99,9 Gew.-% Diphosphinsäure der Formel (I) und 40 bis 0,1 Gew.-% Alkylphosphinsäure der Formel (II).

Besonders gut geeignet sind auch Mischungen enthaltend 80 bis 99,9 Gew.-% Diphosphinsäure der Formel (I) und 20 bis 0,1 Gew.-% Alkylphosphinsäure der Formel (II).

Bevorzugt sind ebenfalls Mischungen, die 90 bis 99,9 Gew.-% Diphosphinsäure der Formel (I) und 10 bis 0,1 Gew.-% Alkylphosphinsäure der Formel (II) enthalten.

Für viele Anwendungsbereiche besonders geeignet sind Mischungen, enthaltend 95 bis 99,9 Gew.-% Diphosphinsäure der Formel (I) und 5 bis 0,1 Gew.-% Alkylphosphinsäure der Formel (II).

Insbesondere enthalten die Mischungen 98 bis 99,9 Gew.-% Diphosphinsäure der Formel (I) und 2 bis 0,1 Gew.-% Alkylphosphinsäure der Formel (II).

Die Erfindung betrifft bevorzugt Mischungen der vorgenannten Art, in denen es sich bei der Diphosphinsäure um Ethylen-1,2-bis(ethylphosphinsäure), Ethylen-1,2-bis(propylphosphinsäure), Ethylen-1,2-bis(butylphosphinsäure), Ethylen-1,2-bis(pentylphosphinsäure), Ethylen-1,2-bis(hexylphosphinsäure), Butylen-1,2-bis(ethylphosphinsäure), Butylen-1,2-bis(propylphosphinsäure), Butylen-1,2-bis(butylphosphinsäure), Butylen-1,2-bis(pentylphosphinsäure), Butylen-1,2-bis(hexylphosphinsäure), Hexylen-1,2-bis(ethylphosphinsäure), Hexylen-1,2-bis(propylphosphinsäure), Hexylen-1,2-bis(butylphosphinsäure), Hexylen-1,2-bis(pentylphosphinsäure) oder Hexylen-1,2-bis(hexylphosphinsäure) und bei der Alkylphosphinsäure um Ethylphosphinsäure, Propylphosphinsäure, Butylphosphinsäure, Pentylphosphinsäure oder Hexylphosphinsäure handelt.

Insbesondere betrifft die vorliegende Erfindung Mischungen aus Ethylen-1,2-bis(ethylphosphinsäure) und Ethylphosphinsäure, enthaltend 98 bis 99,9 Gew.-% Ethylen-1,2-bis(ethylphosphinsäure) und 0,1 bis 2 Gew.-% Ethylphosphinsäure.

Bevorzugt enthalten die erfindungsgemäßen Mischungen weiterhin mindestens einen Synergisten, wobei es sich dabei um Melem, Melam, Melon, Melaminborat, Melamincyanurat, Melaminphosphat, Dimelaminphosphat, Pentamelamintriphosphat, Trimelamindiphosphat, Tetrakismelamintriphosphat, Hexakismelaminpentaphosphat, Melamindiphosphat, Melamintetraphosphat, Melaminpyrophosphat, Melaminpolyphosphat, Melampolyphosphat, Melempolyphosphat und/oder Melonpolyphosphat; um Aluminiumverbindungen, Magnesiumverbindungen, Zinnverbindungen, Antimonverbindungen, Zinkverbindungen, Siliziumverbindungen, Phosphorverbindungen, Carbodiimide, Phosphazene, Piperazine, Piperazin(pyro)phosphate, (Poly-)isocyanate und /oder Styrol-Acryl-Polymere;
um Aluminiumhydroxid, Halloysite, Saphire-Produkte, Böhmit, Nano-Böhmit; um Magnesiumhydroxid; um Antimonoxide; um Zinnoxide; um Zinkoxid, Zinkhydroxid, Zinkoxidhydrat, Zinkcarbonat, Zinkstannat, Zinkhydroxystannat, Zink-Silicat, Zinkphosphat, Zinkborphosphat, Zinkborat und/oder Zinkmolybdat; um Phosphinsäuren und ihre Salze, Phosphonsäuren und ihre Salze und/oder Phosphinoxide; um Carbinylbiscaprolactam; um stickstoffhaltige Verbindungen aus der Gruppe oligomere Ester des Tris(hydroxyethyl)isocyanurats mit aromatischen Polycarbinsäuren, oder Benzoguanamin, Acetoguanamin, Tris(hydroxyethyl)-isocyanurat, Allantoin, Glycouril, Cyanurate, Cyanurate-Epoxidverbindungen, Harnstoffcyanurat, Dicyanamid, Guanidin, Guanidinphosphat und/oder -sulfat handelt.

Bevorzugt enthalten die Mischungen 99 bis 1 Gew.-% der Mischung von Diphosphinsäuren der Formel (I) und Alkylphosphinsäure der Formel (II) nach mindestens einem der Ansprüche 1 bis 12 und 1 bis 99 Gew.-% Synergist.

Die Erfindung betrifft auch ein Verfahren zur Herstellung der Mischungen nach mindestens einem der Ansprüche 1 bis 10, dadurch gekennzeichnet, dass eine Phosphinsäurequelle mit einem Alkin in Anwesenheit eines Initiators zu einer Mischung von Diphosphinsäuren der Formel (I) und Alkylphosphinsäure der Formel (II) umgesetzt wird.

Bevorzugt handelt es sich bei der Phosphinsäurequelle um Ethylphosphinsäure und bei dem Alkin um Acetylen, Methylacetylen, 1-Butin, 1-Hexin, 2-Hexin, 1-Octin, 4-Octin, 1-Butin-4-ol, 2-Butin-1-ol, 3-Butin-1-ol, 5-Hexinl-ol, 1-Octin-3-ol,1-Pentin, Phenylacetylen, Trimethylsilylacetylen und/oder Diphenylacetylen.

Bevorzugt handelt es sich bei dem Initiator um einen Radikalinitiator mit einer Stickstoff-Stickstoff- oder einer Sauerstoff-Sauerstoff-Bindung.

Bevorzugt handelt es sich bei dem Radikalinitiator um 2,2'-Azobis(2-amidinopropan)-dihydrochlorid, 2,2'-Azobis(N,N'-dimethylenisobutyramidin)dihydrochlorid, Azobis(isobutyronitril), 4,4'Azobis(4-cyano-pentansäure) und/oder 2,2'Azobis(2-methylbutyronitril oder um Wasserstoffperoxid, Ammoniumperoxodisulfat, Kaliumoperoxodisulfat, Dibenzoylperoxid, Di-tert.-butylperoxid, Peressigsäure, Diisobutyryl-peroxid, Cumol-peroxineodecanoat, tert.-Butyl-peroxineodecanoat, tert.-Butyl-peroxipivalat, tert.-Amyl-peroxipivalat, Dipropyl-peroxidicarbonat, Dibutyl-peroxidicarbonat, Dimyristyl-peroxidicarbonat, Dilauroyl-peroxid, 1,1,3,3-Tetramethylbutyl-peroxi-2-ethylhexanoat, tert.-Amyl-peroxi-2-ethylhexylcarbonat, tert.-Butyl-peroxiisobutyrat, 1,1-Di-(tert.-butylperoxi)-cyclohexan, tert.-Butyl-peroxibenzoat, tert.-Butyl-peroxiacetat, tert.-Butyl-peroxidiethylacetat, tert.-Butyl-peroxiisopropylcarbonat, 2,2-Di-(tert.-butylperoxi)-butan, tert.-Amyl-hydroperoxid und/oder 2,5-Dimethyl-2,5-di-(tert.-butylperoxi)-hexan.

Bevorzugt handelt es sich bei dem Lösungsmittel um gradkettige oder verzweigte Alkane, alkylsubstituierte aromatische Lösungsmittel, mit Wasser nicht oder nur teilweise mischbare Alkohole oder Ether, Wasser und/oder Essigsäure.

Bevorzugt handelt es sich bei dem Alkohol um Methanol, Propanol, i-Butanol und/oder n-Butanol oder Mischungen dieser Alkohole mit Wasser.

Bevorzugt beträgt die Reaktionstemperatur zwischen 50 und 150 °C.

Die Erfindung betrifft auch die Verwendung von Mischungen nach mindestens einem der Ansprüche 1 bis 10 als Zwischenprodukt für weitere Synthesen, als Binder, als Vernetzer bzw. Beschleuniger beim Aushärten von Epoxyharzen, Polyurethanen und ungesättigten Polyesterharzen, als Polymerstabilisatoren, als Pflanzenschutzmittel, als Sequestrierungsmittel, als Mineralöl-Additiv, als Korrosionsschutzmittel, in Wasch- und Reinigungsmittelanwendungen und in Elektronikanwendungen.

Besonders bevorzugt ist die Verwendung von Mischungen nach mindestens einem der Ansprüche 1 bis 12 als Flammschutzmittel, insbesondere als Flammschutzmittel für Klarlacke und Intumeszenzbeschichtungen, als Flammschutzmittel für Holz und andere cellulosehaltige Produkte, als reaktives und/oder nicht reaktives Flammschutzmittel für Polymere, zur Herstellung von flammgeschützten Polymerformmassen, zur Herstellung von flammgeschützten Polymerformkörpern und/oder zum flammhemmend Ausrüsten von Polyester und Cellulose-Rein- und Mischgeweben durch Imprägnierung sowie als Synergist.

Die Erfindung betrifft auch flammgeschützte thermoplastische oder duroplastische Polymerformmassen, Polymer-Formkörper, -Filme, -Fäden und -Fasern enthaltend 0,5 bis 45 Gew.-% Mischungen nach mindestens einem der Ansprüche 1 bis 12, 55 bis 99,5 Gew.-% thermoplastisches oder duroplastisches Polymer oder Mischungen derselben, 0 bis 55 Gew.-% Additive und 0 bis 55 Gew.-% Füllstoff bzw. Verstärkungsmaterialien, wobei die Summe der Komponenten 100 Gew.-% beträgt.

Schließlich betrifft die Erfindung auch flammgeschützte thermoplastische oder duroplastische Polymerformmassen, Polymer-Formkörper, -Filme, -Fäden und -Fasern, enthaltend 1 bis 30 Gew.-% Mischungen nach mindestens einem der Ansprüche 1 bis 12, 10 bis 95 Gew.-% thermoplastisches oder duroplastisches Polymer oder Mischungen derselben, 2 bis 30 Gew.-% Additive und 2 bis 30 Gew.-% Füllstoff bzw. Verstärkungsmaterialien, wobei die Summe der Komponenten 100 Gew.-% beträgt.

R¹ und R² sind gleich oder verschieden und bedeuten Ethyl, n-Propyl, iso-Propyl, n-Butyl, iso-Butyl, tert.-Butyl, n-Pentyl, iso-Pentyl, n-Hexyl, iso-Hexyl und/oder Phenyl; R³ bedeutet (unabhängig von R¹ und R²) Ethyl, n-Propyl, iso-Propyl, n-Butyl, iso-Butyl, tert.-Butyl, n-Pentyl, iso-Pentyl, n-Hexyl, iso-Hexyl und/oder Phenyl und R⁴ bedeutet Ethylen, Butylen, Hexylen oder Octylen, damit ist die C₂-, C₄-, C₆- oder C₈-Gruppe, die die beiden P-Atome verbindet, gemeint. Bevorzugte Zweier-Mischungen von mindestens einer Diphosphinsäure der Formel (I) und mindestens einer Alkylphosphonsäure der Formel (II) setzen sich zusammen aus
Ethylen-1,2-bis(ethylphosphinsäure) und Ethylphosphinsäure,
Ethylen-1,2-bis(ethylphosphinsäure) und Propylphosphinsäure,
Ethylen-1,2-bis(ethylphosphinsäure) und Butylphosphinsäure,
Ethylen-1,2-bis(ethylphosphinsäure) und Pentylphosphpnisäure,
Ethylen-1,2-bis(ethylphosphinsäure) und Hexylphosphinsäure,
Ethylen-1,2-bis(propylphosphinsäure) und Ethylphosphinsäure,
Ethylen-1,2-bis(propylphosphinsäure) und Propylphosphinsäure,
Ethylen-1,2-bis(propylphosphinsäure) und Butylphosphinsäure,
Ethylen-1,2-bis(propylphosphinsäure) und Pentylphosphpnisäure,
Ethylen-1,2-bis(propylphosphinsäure) und Hexylphosphinsäure,
Ethylen-1,2-bis(butylphosphinsäure) und Ethylphosphinsäure,
Ethylen-1,2-bis(butylphosphinsäure) und Propylphosphinsäure,
Ethylen-1,2-bis(butylphosphinsäure) und Butylphosphinsäure,
Ethylen-1,2-bis(butylphosphinsäure) und Pentylphosphpnisäure,
Ethylen-1,2-bis(butylphosphinsäure) und Hexylphosphinsäure,
Ethylen-1,2-bis(pentylphosphinsäure) und Ethylphosphinsäure,
Ethylen-1,2-bis(pentylphosphinsäure) und Propylphosphinsäure,
Ethylen-1,2-bis(pentylphosphinsäure) und Butylphosphinsäure,
Ethylen-1,2-bis(pentylphosphinsäure) und Pentylphosphpnisäure,
Ethylen-1,2-bis(pentylphosphinsäure) und Hexylphosphinsäure,
Ethylen-1,2-bis(hexylphosphinsäure) und Ethylphosphinsäure,
Ethylen-1,2-bis(hexylphosphinsäure) und Propylphosphinsäure,
Ethylen-1,2-bis(hexylphosphinsäure) und Butylphosphinsäure,
Ethylen-1,2-bis(hexylphosphinsäure) und Pentylphosphpnisäure,
Ethylen-1,2-bis(hexylphosphinsäure) und Hexylphosphinsäure,
Butylen-1,2-bis(ethylphosphinsäure) und Ethylphosphinsäure,
Butylen-1,2-bis(ethylphosphinsäure) und Propylphosphinsäure,
Butylen-1,2-bis(ethylphosphinsäure) und Butylphosphinsäure,
Butylen-1,2-bis(ethylphosphinsäure) und Pentylphosphpnisäure,
Butylen-1,2-bis(ethylphosphinsäure) und Hexylphosphinsäure,
Butylen-1,2-bis(propylphosphinsäure) und Ethylphosphinsäure,
Butylen-1,2-bis(propylphosphinsäure) und Propylphosphinsäure,
Butylen-1,2-bis(propylphosphinsäure) und Butylphosphinsäure,
Butylen-1,2-bis(propylphosphinsäure) und Pentylphosphpnisäure
Butylen-1,2-bis(propylphosphinsäure) und Hexylphosphinsäure,
Butylen-1,2-bis(butylphosphinsäure) und Ethylphosphinsäure,
Butylen-1,2-bis(butylphosphinsäure) und Propylphosphinsäure,
Butylen-1,2-bis(butylphosphinsäure) und Butylphosphinsäure,
Butylen-1,2-bis(butylphosphinsäure) und Pentylphosphpnisäure,
Butylen-1,2-bis(butylphosphinsäure) und Hexylphosphinsäure,
Butylen-1,2-bis(pentylphosphinsäure) und Ethylphosphinsäure,
Butylen-1,2-bis(pentylphosphinsäure) und Propylphosphinsäure,
Butylen-1,2-bis(pentylphosphinsäure) und Butylphosphinsäure,
Butylen-1,2-bis(pentylphosphinsäure) und Pentylphosphpnisäure,
Butylen-1,2-bis(pentylphosphinsäure) und Hexylphosphinsäure,
Butylen-1,2-bis(hexylphosphinsäure) und Ethylphosphinsäure,
Butylen-1,2-bis(hexylphosphinsäure) und Propylphosphinsäure,
Butylen-1,2-bis(hexylphosphinsäure) und Butylphosphinsäure,
Butylen-1,2-bis(hexylphosphinsäure) und Pentylphosphpnisäure,
Butylen-1,2-bis(hexylphosphinsäure) und Hexylphosphinsäure,
Hexylen-1,2-bis(ethylphosphinsäure) und Ethylphosphinsäure,
Hexylen-1,2-bis(ethylphosphinsäure) und Propylphosphinsäure,
Hexylen-1,2-bis(ethylphosphinsäure) und Butylphosphinsäure,
Hexylen-1,2-bis(ethylphosphinsäure) und Pentylphosphpnisäure,
Hexylen-1,2-bis(ethylphosphinsäure) und Hexylphosphinsäure,
Hexylen-1,2-bis(propylphosphinsäure) und Ethylphosphinsäure,
Hexylen-1,2-bis(propylphosphinsäure) und Propylphosphinsäure,
Hexylen-1,2-bis(propylphosphinsäure) und Butylphosphinsäure,
Hexylen-1,2-bis(propylphosphinsäure) und Pentylphosphpnisäure,
Hexylen-1,2-bis(propylphosphinsäure) und Hexylphosphinsäure,
Hexylen-1,2-bis(butylphosphinsäure) und Ethylphosphinsäure,
Hexylen-1,2-bis(butylphosphinsäure) und Propylphosphinsäure,
Hexylen-1,2-bis(butylphosphinsäure) und Butylphosphinsäure,
Hexylen-1,2-bis(butylphosphinsäure) und Pentylphosphpnisäure,
Hexylen-1,2-bis(butylphosphinsäure) und Hexylphosphinsäure,
Hexylen-1,2-bis(pentylphosphinsäure) und Ethylphosphinsäure,
Hexylen-1,2-bis(pentylphosphinsäure) und Propylphosphinsäure,
Hexylen-1,2-bis(pentylphosphinsäure) und Butylphosphinsäure,
Hexylen-1,2-bis(pentylphosphinsäure) und Pentylphosphpnisäure,
Hexylen-1,2-bis(pentylphosphinsäure) und Hexylphosphinsäure,
Hexylen-1,2-bis(hexylphosphinsäure) und Ethylphosphinsäure,
Hexylen-1,2-bis(hexylphosphinsäure) und Propylphosphinsäure,
Hexylen-1,2-bis(hexylphosphinsäure) und Butylphosphinsäure,
Hexylen-1,2-bis(hexylphosphinsäure) und Pentylphosphpnisäure,
Hexylen-1,2-bis(hexylphosphinsäure) und Hexylphosphinsäure.

Daneben können auch Mehrfach-Mischungen auftreten, z. B. aus Ethylen-1,2-bis(ethylphosphinsäure), Ethyl-phosphinsäure und Butyl-phosphinsäure oder etwa aus Ethylen-1,2-bis(ethylphosphinsäure), Ethylen-1,2-bis(butylphosphinsäure), Ethyl-phosphinsäure und Butyl-phosphinsäure usw.

Bevorzugt sind erfindungsgemäß Mischungen, bestehend aus 98 bis 99,9 Gew.-% Ethylen-1,2-bis(ethylphosphinsäure) und 0,1 bis 2 Gew.-% Ethylphosphinsäure.

Bevorzugt handelt es sich bei dem Synergist um einen ausdehnungsneutralen Stoff, d. h. dass er sich unter thermischer oder ähnlicher Belastung in seinen Ausmaßen nicht verändert. Solche Änderungen können mittels des thermischen Ausdehnungskoeffizienten bestimmt werden. Dieser beschreibt die Veränderungen der Abmessungen eines Stoffes bei Temperaturveränderungen.

Bevorzugte Mengenverhältnisse sind 99 bis 50 Gew.-% der Mischung von Diphosphinsäuren der Formel (I) und Alkylphosphinsäure der Formel (II) nach mindestens einem der Ansprüche 1 bis 12 und 1 bis 50 Gew.-% Synergist.

Beim erfindungsgemäßen Verfahren wird eine Phosphinsäurequelle mit einem Alkin in Anwesenheit eines Initiators umgesetzt. Dabei wird typischerweise zunächst ein Alken mit Phosphinsäure zu einer Alkylphosphinsäure umgesetzt, welche dann danach mit einem Alkin weiter zur erfindungsgemäßen Mischung reagiert wird.

Bevorzugt wird hierbei Phosphinsäure selbst mit Ethylen in Gegenwart eines (Metallocen-)Katalysators zur Ethylphosphinsäure umgesetzt und diese nach erfolgter Reinigung mit Acetylen in Gegenwart eines Initators zum erfindungsgemäßen Gemisch einer Diphosphinsäure der Formel (I) mit mindestens einer Alkylphosphinsäure der Formel (II) umgesetzt.

Bevorzugt ist die Verarbeitung der erfindungsgemäßen Mischungen von mindestens einer Diphosphinsäure der Formel (I) und mindestens einer Alkylphosphinsäure der Formel (II) durch Einmischen in ein Polymersystem.

Das Einmischen erfolgt üblicherweise durch Kneten, Dispergieren und/oder Extrudieren.

Bevorzugt erfolgt die Verwendung der erfindungsgemäßen Mischungen von mindestens einer Diphosphinsäure der Formel (I) und mindestens einer Alkylphosphinsäure der Formel (II) auch durch additive Einarbeitung in ein Polymersystem.

Besonders bevorzugt erfolgt die Verwendung von Mischungen von mindestens einer Diphosphinsäure der Formel (I) und mindestens einer Alkylphosphinsäure der Formel (II) durch Einreaktion in ein Polymersystem. Die Einreaktion ist durch eine resultierende, permanente Bindung zu den Polymersträngen des Polymersystems gekennzeichnet, wodurch die erfindungsgemäße Mischung von mindestens einer Diphosphinsäure der Formel (I) und mindestens einer Alkylphosphinsäure der Formel (II) aus dem Polymer nicht herausgelöst werden kann.

Geeignete Polymer-Additive für flammgeschützte Polymerformmassen und Polymerformkörper sind UV-Absorber, Lichtschutzmittel, Gleitmittel, Farbmittel, Antistatika, Nukleierungsmittel, Füllstoffe, Synergisten, Verstärkungsmittel und andere.

Bevorzugt stammen die Polymersysteme aus der Gruppe der thermoplastischen Polymere wie Polyamid, Polyester oder Polystyrol und/oder duroplastischen Polymere.

Bevorzugt handelt es sich bei den duroplastischen Polymeren um Epoxidharze.

Bevorzugt handelt es sich bei den duroplastischen Polymeren um Epoxidharze, die mit Resolen, Phenolen, Phenolderivaten und/oder Dicyandiamid, Alkoholen und Aminen gehärtet sind.

Besonders bevorzugt handelt es sich bei den duroplastischen Polymeren um Epoxidharze, die mit Phenolen und/oder Dicyandiamid und/oder einem Katalysator gehärtet sind.

Bevorzugt handelt es sich bei den Katalysatoren um Imidazolverbindungen.

Bevorzugt handelt es sich bei den Epoxidharzen um Polyepoxidverbindungen.

Bevorzugt stammen die Epoxidharze aus der Gruppe der Novolacke und der Bisphenol-A Harze.

Bevorzugt handelt es sich bei den Polymeren um Polymere von Mono- und Diolefinen, beispielsweise Polypropylen, Polyisobutylen, Polybuten-1, Poly-4-methyl-penten-1, Polyisopren oder Polybutadien sowie Polymerisate von Cycloolefinen wie z. B. von Cyclopenten oder Norbornen; ferner Polyethylen (das gegebenenfalls vernetzt sein kann), z. B. Polyethylen hoher Dichte (HDPE), Polyethylen hoher Dichte und hoher Molmasse (HDPE-HMW), Polyethylen hoher Dichte und ultrahoher Molmasse (HDPE-UHMW), Polyethylen mittlerer Dichte (MDPE), Polyethylen niederer Dichte (LDPE), lineares Polyethylen niederer Dichte (LLDPE), verzweigtes Polyethylen niederer Dichte (VLDPE), sowie Mischungen davon.

Bevorzugt handelt es sich bei den Polymeren um Copolymere von Mono- und Diolefinen untereinander oder mit anderen Vinylmonomeren, wie z. B. Ethylen-Propylen-Copolymere, lineares Polyethylen niederer Dichte (LLDPE) und Mischungen desselben mit Polyethylen niederer Dichte (LDPE), Propylen-Buten-1-Copolymere, Propylen-Isobutylen-Copolymere, Ethylen-Buten-1-Copolymere, Ethylen-Hexen-Copolymere, Ethylen-Methylpenten-Copolymere, Ethylen-Hepten-Copolymere, Ethylen-Octen-Copolymere, Propylen-Butadien-Copolymere, Isobutylen-Isopren-Copolymere, Ethylen-Alkylacrylat-Copolymere, Ethylen-Alkylmethacrylat-Copolymere, Ethylen-Vinylacetat-Copolymere und deren Copolymere mit Kohlenstoffmonoxid, oder Ethylen-Acrylsäure-Copolymere und deren Salze (lonomere), sowie Terpolymere von Ethylen mit Propylen und einem Dien, wie Hexadien, Dicyclopentadien oder Ethylidennorbornen; ferner Mischungen solcher Copolymere untereinander, z. B. Polypropylen/Ethylen-Propylen-Copolymere, LDPE/Ethylen-Vinylacetat-Copolymere, LDPE/Ethylen-Acrylsäure-Copolymere, LLDPE/Ethylen-Vinylacetat-Copolymere, LLDPE/Ethylen-Acrylsäure-Copolymere und alternierend oder statistisch aufgebaute Polyalkylen/Kohlenstoffmonoxid-Copolymere und deren Mischungen mit anderen Polymeren wie z. B. Polyamiden.

Bevorzugt handelt es sich bei den Polymeren um Kohlenwasserstoffharze (z. B. C₅-C₉) inklusive hydrierte Modifikationen davon (z. B. Klebrigmacherharze) und Mischungen von Polyalkylenen und Stärke.

Bevorzugt handelt es sich bei den Polymeren um Polystyrol (Polystyrol^{®} 143E (BASF), Poly-(p-methylstyrol), Poly-(alpha-methylstyrol).

Bevorzugt handelt es sich bei den Polymeren um Copolymere von Styrol oder alpha-Methylstyrol mit Dienen oder Acrylderivaten, wie z. B. Styrol-Butadien, Styrol-Acrylnitril, Styrol-Alkylmethacrylat, Styrol-Butadien-Alkylacrylat und - methacrylat, Styrol-Maleinsäureanhydrid, Styrol-Acrylnitril-Methylacrylat; Mischungen von hoher Schlagzähigkeit aus Styrol-Copolymeren und einem anderen Polymer, wie z. B. einem Polyacrylat, einem Dien-Polymeren oder einem Ethylen-Propylen-Dien-Terpolymeren; sowie Block-Copolymere des Styrols, wie z. B. Styrol-Butadien-Styrol, Styrol-Isopren-Styrol, Styrol-Ethylen/Butylen-Styrol oder Styrol-Ethylen/Propylen-Styrol.

Bevorzugt handelt es sich bei den Polymeren um Pfropfcopolymere von Styrol oder alpha-Methylstyrol, wie z. B. Styrol auf Polybutadien, Styrol auf Polybutadien-Styrol- oder Polybutadien-Acrylnitril-Copolymere, Styrol und Acrylnitril (bzw. Methacrylnitril) auf Polybutadien; Styrol, Acrylnitril und Methylmethacrylat auf Polybutadien; Styrol und Maleinsäureanhydrid auf Polybutadien; Styrol, Acrylnitril und Maleinsäureanhydrid oder Maleinsäureimid auf Polybutadien; Styrol und Maleinsäureimid auf Polybutadien, Styrol und Alkylacrylate bzw. Alkylmethacrylate auf Polybutadien, Styrol und Acrylnitril auf Ethylen-Propylen-Dien-Terpolymeren, Styrol und Acrylnitril auf Polyalkylacrylaten oder Polyalkylmethacrylaten, Styrol und Acrylnitril auf Acrylat-Butadien-Copolymeren, sowie deren Mischungen, wie sie z. B. als sogenannte ABS-, MBS-, ASA- oder AES-Polymere bekannt sind.

Bevorzugt handelt es sich bei den Styrol-Polymeren um eher grobporigen Schaum wie EPS (expandiertes Polystyrol), z. B. Styropor (BASF) und/oder feinporigeren wie XPS (Extrudierter Polystyrol-Hartschaum), z. B. Styrodur^{®} (BASF). Bevorzugt sind Polystyrolschaumstoffe wie z. B. Austrotherm^{®} XPS, Styrofoam^{®} (Dow Chemical), Floormate^{®}, Jackodur^{®}, Lustron^{®}, Roofmate^{®}, Sagex^{®} und Telgopor^{®}.

Bevorzugt handelt es sich bei den Polymeren um Halogenhaltige Polymere, wie z. B. Polychloropren, Chlorkautschuk, chloriertes und bromiertes Copolymer aus Isobutylen-Isopren (Halobutylkautschuk), chloriertes oder chlorsulfoniertes Polyethylen, Copolymere von Ethylen und chloriertem Ethylen, Epichlorhydrinhomo- und -copolymere, insbesondere Polymere aus halogenhaltigen Vinylverbindungen, wie z. B. Polyvinylchlorid, Polyvinylidenchlorid, Polyvinylfluorid, Polyvinylidenfluorid; sowie deren Copolymere, wie Vinylchlorid-Vinylidenchlorid, Vinylchlorid-Vinylacetat oder Vinylidenchlorid-Vinylacetat.

Bevorzugt handelt es sich bei den Polymeren um Polymere, die sich von alpha-, beta-ungesättigten Säuren und deren Derivaten ableiten, wie Polyacrylate und Polymethacrylate, mit Butylacrylat schlagzäh modifizierte Polymethylmethacrylate, Polyacrylamide und Polyacrylnitrile und Copolymere der genannten Monomeren untereinander oder mit anderen ungesättigten Monomeren, wie z. B. Acrylnitril-Butadien-Copolymere, Acrylnitril-Alkylacrylat-Copolymere, Acrylnitril-Alkoxyalkylacrylat-Copolymere, Acrylnitril-Vinylhalogenid-Copolymere oder Acrylnitril-Alkylmethacrylat-Butadien-Terpolymere.

Bevorzugt handelt es sich bei den Polymeren um Polymere, die sich von ungesättigten Alkoholen und Aminen bzw. deren Acylderivaten oder Acetalen ableiten, wie Polyvinylalkohol, Polyvinylacetat, -stearat, -benzoat, -maleat, Polyvinylbutyral, Polyallylphthalat, Polyallylmelamin; sowie deren Copolymere mit Olefinen.

Bevorzugt handelt es sich bei den Polymeren um Homo- und Copolymere von cyclischen Ethern, wie Polyalkylenglykole, Polyethylenoxyd, Polypropylenoxyd oder deren Copolymere mit Bisglycidylethern.

Bevorzugt handelt es sich bei den Polymeren um Polyacetale, wie Polyoxymethylen, sowie solche Polyoxymethylene, die Comonomere, wie z. B. Ethylenoxid, enthalten; Polyacetale, die mit thermoplastischen Polyurethanen, Acrylaten oder MBS modifiziert sind.

Bevorzugt handelt es sich bei den Polymeren um Polyphenylenoxide und -sulfide und deren Mischungen mit Styrolpolymeren oder Polyamiden.

Bevorzugt handelt es sich bei den Polymeren um Polyurethane, die sich von Polyethern, Polyestern und Polybutadienen mit endständigen Hydroxylgruppen einerseits und aliphatischen oder aromatischen Polyisocyanaten andererseits ableiten, sowie deren Vorprodukte.

Bevorzugt handelt es sich bei den Polymeren um Polyamide und Copolyamide, die sich von Diaminen und Dicarbonsäuren und/oder von Aminocarbonsäuren oder den entsprechenden Lactamen ableiten, wie Polyamid 2/12, Polyamid 4 (Poly-4-aminobuttersäure, Nylon^{®} 4, Fa. DuPont), Polyamid 4/6 (Poly(tetramethylen-adipamid), Poly-(tetramethylen-adipinsäurediamid), Nylon^{®} 4/6, Fa. DuPont), Polyamid 6 (Polycaprolactam, Poly-6-aminohexansäure, Nylon^{®} 6, Fa. DuPont, Akulon K122, Fa. DSM; Zytel^{®} 7301, Fa. DuPont; Durethan^{®} B 29, Fa. Bayer), Polyamid 6/6 ((Poly(N,N'-hexamethyleneadipinediamid), Nylon^{®} 6/6 , Fa. DuPont, Zytel^{®} 101, Fa. DuPont; Durethan A30, Durethan^{®} AKV, Durethan^{®} AM, Fa. Bayer; Ultramid^{®} A3, Fa BASF), Polyamid 6/9 (Poly(hexamethylen nonanediamid), Nylon^{®} 6/9 , Fa. DuPont), Polyamid 6/10 (Poly(hexamethylen sebacamid), Nylon^{®} 6/10, Fa. DuPont), Polyamid 6/12 (Poly(hexamethylendodecanediamid), Nylon^{®} 6/12 , Fa. DuPont), Polyamid 6/66 (Poly(hexamethylenadipamid-co-caprolactam), Nylon^{®} 6/66 , Fa. DuPont), Polyamid 7 (Poly-7-aminoheptansäure, Nylon^{®} 7, Fa. DuPont), Polyamid 7,7 (Polyheptamethylenpimelamid, Nylon^{®} 7,7, Fa. DuPont), Polyamid 8 (Poly-8-aminooctansäure, Nylon^{®} 8, Fa. DuPont), Polyamid 8,8 (Polyoctamethylensuberamid, Nylon^{®} 8,8, Fa. DuPont), Polyamid 9 (Poly-9-aminononansäure, Nylon^{®} 9, Fa. DuPont), Polyamid 9,9 (Polynonamethylenazelamid, Nylon^{®} 9,9, Fa. DuPont), Polyamid 10 (Poly-10-amino-decansäure, Nylon^{®} 10, Fa. DuPont), Polyamid 10,9 (Poly(decamethylenazelamid), Nylon^{®} 10,9, Fa. DuPont), Polyamid 10,10 (Polydecamethylensebacamid, Nylon^{®} 10,10, Fa. DuPont), Polyamid 11 (Poly-11-aminoundecansäure, Nylon^{®} 11, Fa. DuPont), Polyamid 12 (Polylauryllactam, Nylon^{®} 12 , Fa. DuPont, Grillamid^{®} L20, Fa. Ems Chemie), aromatische Polyamide ausgehend von m-Xylol, Diamin und Adipinsäure; Polyamide, hergestellt aus Hexamethylendiamin und Iso- und/oder Terephthalsäure (Polyhexamethylenisophthalamid, Polyhexamethylenterephthalamid) und gegebenenfalls einem Elastomer als Modifikator, z. B. Poly-2,4,4-trimethylhexamethylenterephthalamid oder Poly-m-phenylenisophthalamid. Blockcopolymere der vorstehend genannten Polyamide mit Polyolefinen, Olefin-Copolymeren, lonomeren oder chemisch gebundenen oder gepfropften Elastomeren; oder mit Polyethern, wie z. B. mit Polyethylenglykol, Polypropylenglykol oder Polytetramethylenglykol. Ferner mit EPDM (Ethylen-Propylen-Dien-Kautschuk) oder ABS (Acrylnitril-Butadien-Styrol) modifizierte Polyamide oder Copolyamide; sowie während der Verarbeitung kondensierte Polyamide ("RIM-Polyamidsysteme").

Bevorzugt handelt es sich bei den Polymeren um Polyharnstoffe, Polyimide, Polyamidimide, Polyetherimide, Polyesterimide, Polyhydantoine und Polybenzimidazole.

Bevorzugt handelt es sich bei den Polymeren um Polyester, die sich von Dicarbonsäuren und Dialkoholen und/oder von Hydroxycarbonsäuren oder den entsprechenden Lactonen ableiten, wie Polyethylenterephthalat, Polybutylenterephthalat (Celanex^{®} 2500, Celanex^{®} 2002, Fa Celanese; Ultradur^{®}, Fa. BASF), Poly-1,4-dimethylolcyclohexanterephthalat, Polyhydroxybenzoate, sowie Block-Polyetherester, die sich von Polyethern mit Hydroxylendgruppen ableiten; ferner mit Polycarbonaten oder MBS modifizierte Polyester.

Bevorzugt handelt es sich bei den Polymeren um Polycarbonate und Polyestercarbonate.

Bevorzugt handelt es sich bei den Polymeren um Polysulfone, Polyethersulfone und Polyetherketone.

Bevorzugt handelt es sich bei den Polymeren um vernetzte Polymere, die sich von Aldehyden einerseits und Phenolen, Harnstoff oder Melamin andererseits ableiten, wie Phenol-Formaldehyd-, Harnstoff-Formaldehyd- und Melamin-Formaldehydharze.

Bevorzugt handelt es sich bei den Polymeren um trocknende und nicht-trocknende Alkydharze.

Bevorzugt handelt es sich bei den Polymeren um ungesättigte Polyesterharze, die sich von Copolyestern gesättigter und ungesättigter Dicarbonsäuren mit mehrwertigen Alkoholen, sowie Vinylverbindungen als Vernetzungsmittel ableiten, wie auch deren halogenhaltige, schwerbrennbare Modifikationen.

Bevorzugt handelt es sich bei den Polymeren um vernetzbare Acrylharze, die sich von substituierten Acrylsäureestern ableiten, wie z. B. von Epoxyacrylaten, Urethan-acrylaten oder Polyester-acrylaten.

Bevorzugt handelt es sich bei den Polymeren um Alkydharze, Polyesterharze und Acrylatharze, die mit Melaminharzen, Harnstoffharzen, Isocyanaten, Isocyanuraten, Polyisocyanaten oder Epoxidharzen vernetzt sind.

Bevorzugt handelt es sich bei den Polymeren um vernetzte Epoxidharze, die sich von aliphatischen, cycloaliphatischen, heterocyclischen oder aromatischen Glycidylverbindungen ableiten, z. B. Produkte von Bisphenol-A-diglycidylethern, Bisphenol-F-diglycidylethern, die mittels üblichen Härtern wie z. B. Anhydriden oder Aminen mit oder ohne Beschleunigern vernetzt werden.

Bevorzugt handelt es sich bei den Polymeren um Mischungen (Polyblends) der vorgenannten Polymeren, wie z. B. PP/EPDM (Polypropylen/ Ethylen-Propylen-Dien-Kautschuk), Polyamid/EPDM oder ABS (Polyamid/Ethylen-Propylen-DienKautschuk oder Acrylnitril-Butadien-Styrol), PVC/EVA (Polyvinylchlorid/ Ethylenvinylacetat), PVC/ABS (Polyvinylchlorid/Acrylnitril-Butadien-Styrol), PVC/MBS (Polyvinylchlorid/ Methacrylat-Butadien-Styrol), PC/ABS (Polycarbonat/Acrylnitril-Butadien-Styrol), PBTP/ABS (Polybutylenterephthalat /Acrylnitril-Butadien-Styrol), PC/ASA (Polycarbonat/Acrylester-Styrol-Acrylnitril), PC/PBT (Polycarbonat/Polybutylen-terephthalat), PVC/CPE (Polyvinylchlorid/chloriertes Polyethylen), PVC/Acrylate (Polyvinylchlorid/Acrylate, POM/thermoplastisches PUR (Polyoxymethylen / thermoplastisches Polyurethan), PC/thermoplastisches PUR (Polycarbonat / thermoplastisches Polyurethan), POM/Acrylat (Polyoxymethylen/Acrylat), POM/MBS (Polyoxymethylen/ Methacrylat-Butadien-Styrol), PPO/HIPS (Polyphenylenoxid /High impact polystyrol), PPO/PA 6.6 (Polyphenylenoxid /Polyamid 6.6) und Copolymere, PA/HDPE (Polyamid /High Density Polyethylen), PA/PP (Polyamid / Polyethylen), PA/PPO (Polyamid / Polyphenylenoxid), PBT/PC/ABS (Polybutylenterephthalat / Polycarbonat / Acrylnitril-Butadien-Styrol) und/ oder PBT/PET/PC (Polybutylenterephthalat / Polyethylenterephthalat / Polycarbonat).
Die Polymere können lasermarkierbar sein.

Bevorzugt weist die hergestellte Formmasse eine rechteckige Form mit regelmäßiger oder unregelmäßiger Grundfläche, Würfelform, Quaderform, Kissenform, Prismenform auf.

Die Erfindung wird durch die nachstehenden Beispiele erläutert.

Herstellung, Verarbeitung und Prüfung von flammgeschützten Polymerformmassen und flammgeschützten Polymerformkörpern.

Die Flammschutzkomponenten werden mit dem Polymergranulat und evtl. Additiven vermischt und auf einem Doppelschnecken-Extruder (Typ Leistritz LSM^{®} 30/34) bei Temperaturen von 230 bis 260 °C (PBT-GV) bzw. von 260 bis 280 °C (PA 66-GV) eingearbeitet. Der homogenisierte Polymerstrang wurde abgezogen, im Wasserbad gekühlt und anschließend granuliert.

Nach ausreichender Trocknung wurden die Formmassen auf einer Spritzgießmaschine (Typ Aarburg Allrounder) bei Massetemperaturen von 240 bis 270 °C (PBT-GV) bzw. von 260 bis 290 °C (PA 66-GV) zu Prüfkörpern verarbeitet. Die Prüfkörper werden anhand des UL 94-Tests (Underwriter Laboratories) auf Flammwidrigkeit (Flammschutz) geprüft und klassifiziert.

An Prüfkörpern aus jeder Mischung wurden die Brandklasse UL 94 (Underwriter Laboratories) an Probekörpern der Dicke 1,5 mm bestimmt.

Nach UL 94 ergeben sich folgende Brandklassen:
V-0: Kein Nachbrennen länger als 10 sec., Summe der Nachbrennzeiten bei 10 Beflammungen nicht größer als 50 sec., kein brennendes Abtropfen, kein vollständiges Abbrennen der Probe, kein Nachglühen der Proben länger als 30 sec. nach Beflammungsende.
V-1: Kein Nachbrennen länger als 30 sec. nach Beflammungsende, Summe der Nachbrennzeiten bei 10 Beflammungen nicht größer als 250 sec., kein Nachglühen der Proben länger als 60 sec. nach Beflammungsende, übrige Kriterien wie bei V-0.
V-2: Zündung der Watte durch brennendes Abtropfen, übrige Kriterien wie bei V-1.
Nicht klassifizierbar (nkl): Erfüllt nicht die Brandklasse V-2.

Bei einigen untersuchten Proben wurde außerdem der LOI-Wert gemessen. Der LOI-Wert (Limiting Oxygen Index) wird nach ISO 4589 bestimmt. Nach ISO 4589 entspricht der LOI der geringsten Sauerstoffkonzentration in Volumenprozent, die in einer Mischung von Sauerstoff und Stickstoff gerade noch die Verbrennung des Kunststoffs unterhält. Je höher der LOI-Wert, desto schwerer entflammbar ist das geprüfte Material.

| | | |
|---|---|---|
| LOI | 23 | brennbar |
| LOI | 24-28 | bedingt brennbar |
| LOI | 29-35 | flammwidrig |
| LOI | >36 | besonders flammwidrig |

Eingesetzte Chemikalien und Abkürzungen:

| | |
|---|---|
| Phenolnovolak: | Bakelite® PF 0790, Fa. Hexion |
| Initiator: | Vazo 67, Fa. DuPont |

Die Erfindung wird durch die nachstehenden Beispiele erläutert.
Grundsätzlich wird das erfindungsgemäße Verfahren so ausgeführt, dass die Reaktionsmischung unter den gegebenen Reaktionsbedingungen nur einem rel. geringe Acetylenstrom von etwa 1 l/h ausgesetzt wird. Nachdem das Acetylen bis zur genügenden Umsetzung durch die Reaktionslösung geleitet wurde und eine ausreichende Nachreaktionszeit erfolgte, wird die Acetylenzufuhr abgestellt und die Aufarbeitung unter Inertgas-Atmosphäre, bevorzugt Stickstoff durchgeführt. Dazu wird das Reaktionsgemisch mit Stickstoff aus der Apparatur getrieben und nach Abkühlen der Reaktionsmischungen der gebildete Feststoff abgesaugt.

### Beispiel 1 Herstellung von Ethylphosphinsäure

Bei Raumtemperatur werden in einem Dreihalskolben mit Rührer und Intensivkühler 5852 g Tetrahydrofuran vorgelegt und unter Rühren und Durchleiten von Stickstoff "entgast" und alle weiteren Reaktionen unter Stickstoff ausgeführt. Dann werden 70 mg Tris(dibenzyliden-aceton)dipalladium und 95 mg 4,5-Bis(diphenylphosphino)-9,9-dimethylxanthen hinzugegeben und weitere 15 Minuten gerührt, und 198 g Phosphinsäure in 198 g Wasser zugegeben. Die Reaktionslösung wird in einen 2 I-Büchi-Reaktor überführt. Unter Rühren der Reaktionsmischungen wird der Reaktor mit 2,5 bar Ethylen beschickt und das Reaktionsgemisch auf 80 °C geheizt. Nach einer Ethylenaufnahme von 56 g wird auf Raumtemperatur abgekühlt und freies Ethylen unter Verbrennung abgelassen.

Das Reaktionsgemisch wird am Rotationsverdampfer bei maximal 60 °C und 350 - 10 mbar vom Lösungsmittel befreit. Der Rückstand wird mit 300 g VE-Wasser versetzt und 1 Stunde bei Raumtemperatur unter Stickstoffatmosphäre gerührt. Der entstandene Rückstand wird filtriert und das Filtrat mit 200 ml Toluol extrahiert. Die wässrige Phase wird am Rotationsverdampfer bei maximal 60 °C und 250 - 10 mbar vom Lösungsmittel befreit.
31_{P}-NMR(D₂O, gekoppelt): Dublet von Multiplet, 36.7 ppm; Ethylphosphinsäure.

### Beispiel 2

0,5 mol Ethylphosphinsäure (hergestellt nach Beispiel 1) werden in Butanol als Lösungsmittel vorgelegt und unter Rühren 30 Minuten mit einem Stickstoff-Gasstrom inertisiert und auf 80 °C erwärmt. Es wird Acetylen mit 1 l/h durch die Reaktionslösung geleitet und 0,2 mol-% Initiator über 3 Stunden zudosiert. Nach einer Nachreaktionszeit von 30 Minuten wird die Acetylenzufuhr abgestellt und Acetylen mit Stickstoff aus der Apparatur ausgetrieben. Nach Abkühlen der Reaktionsmischungen wird der gebildete Feststoff abgesaugt und mit 75 g Aceton redispergiert, gewaschen und 4 Stunden im Vakuumtrockenschrank bei 100 °C getrocknet. Es wird in einer Ausbeute von 62 %, 33,2 g einer Mischung aus Ethylen-1,2-bis(ethylphosphinsäure) (99,9 Gew.-%) und Ethylphosphinsäure (0,1 Gew.-%) erhalten.

### Beispiel 3

0,5 mol Ethylphosphinsäure (hergestellt nach Beispiel 1) werden in Butanol als Lösungsmittel vorgelegt und unter Rühren 30 Minuten mit einem Stickstoff-Gasstrom inertisiert und auf 80 °C erwärmt. Es wird Acetylen mit 1 l/h durch die Reaktionslösung geleitet und 0,2 mol-% Initiator über 2,5 Stunden zu dosiert. Nach einer Nachreaktionszeit von 30 Minuten wird die Acetylenzufuhr abgestellt und Acetylen mit Stickstoff aus der Apparatur ausgetrieben. Nach Abkühlen der Reaktionsmischung wird der gebildete Feststoff abgesaugt und mit 75 g Aceton redispergiert, gewaschen und 4 Stunden im Vakuumtrockenschrank bei 100 °C getrocknet. Es wird in einer Ausbeute von 64 %, 34,2 g einer Mischung aus Ethylen-1,2-bis(ethylphosphinsäure) (98 Gew.-%) und Ethylphosphinsäure (2 Gew.-%) erhalten.

### Beispiel 4

0,5 mol Ethylphosphinsäure (hergestellt nach Beispiel 1) werden in Butanol als Lösungsmittel vorgelegt und unter Rühren 30 Minuten mit einem Stickstoff-Gasstrom inertisiert und auf 80 °C erwärmt. Es wird Acetylen mit 1 l/h durch die Reaktionslösung geleitet und 0,2 mol-% Initiator über 2 Stunden zudosiert. Nach einer Nachreaktionszeit von 30 Minuten wird die Acetylenzufuhr abgestellt und Acetylen mit Stickstoff aus der Apparatur ausgetrieben. Nach Abkühlen der Reaktionsmischungen wird der gebildete Feststoff abgesaugt und mit 75 g Aceton redispergiert, gewaschen und 4 Stunden im Vakuumtrockenschrank bei 100 °C getrocknet. Es wird in einer Ausbeute von 64 %, 33,8 g einer Mischungs aus Ethylen-1,2-bis(ethylphosphinsäure) (90 Gew.-%) und Ethylphosphinsäure (10 Gew.-%) erhalten.

### Beispiel 5

0,5 mol Ethylphosphinsäure (hergestellt nach Beispiel 1) werden in Butanol als Lösungsmittel vorgelegt und unter Rühren 30 Minuten mit einem Stickstoff-Gasstrom inertisiert und auf 60 °C erwärmt. Es wird Acetylen mit 1 l/h durch die Reaktionslösung geleitet und 0,12 mol-% Initiator über 2 Stunden zudosiert. Nach einer Nachreaktionszeit von 30 Minuten wird die Acetylenzufuhr abgestellt und Acetylen mit Stickstoff aus der Apparatur ausgetrieben. Nach Abkühlen der Reaktionsmischung wird der gebildete Feststoff abgesaugt und mit 75 g Aceton redispergiert, gewaschen und 4 Stunden im Vakuumtrockenschrank bei 100 °C getrocknet. Es wird in einer Ausbeute von 72 %, 36,6 g einer Mischung aus Ethylen-1,2-bis(ethylphosphinsäure) (60 Gew.-%) und Ethylphosphinsäure (40 Gew.-%) erhalten.

### Beispiel 6

0,5 mol Ethylphosphinsäure (hergestellt nach Beispiel 1)werden in Butanol als Lösungsmittel vorgelegt und unter Rühren 30 Minuten mit einem Stickstoff-Gasstrom inertisiert und auf 60 °C erwärmt. Es wird Acetylen mit 1 l/h durch die Reaktionslösung geleitet und 0,05 mol-% Initiator über 2 Stunden zudosiert. Nach einer Nachreaktionszeit von 30 Minuten wird die Acetylenzufuhr abgestellt und Acetylen mit Stickstoff aus der Apparatur ausgetrieben. Nach Abkühlen der Reaktionsmischung wird der gebildete Feststoff abgesaugt und mit 75 g Aceton redispergiert, gewaschen und 4 Stunden im Vakuumtrockenschrank bei 100 °C getrocknet. Es wird in einer Ausbeute von 74 %, 37,2 g einer Mischung aus Ethylen-1,2-bis(ethylphosphinsäure) (50 Gew.-%) und Ethylphosphinsäure (50 Gew.-%) erhalten.

### Vorschrift zur Herstellung von Polymerformkörpern:

### a) Herstellung von phosphormodifiziertem Epoxidharz

In einer 2 I-Fünfhalskolbenapparatur werden 1000 g des Epoxidharzes (z. B. Beckopox EP 140) vorgelegt. Es wird über eine Stunde auf 110 °C geheizt und im Vakuum flüchtige Komponenten entfernt. Danach wird das Reaktionsgemisch mit Stickstoff inertisiert und die Temperatur im Kolben auf 170 °C erhöht. Jeweils 118 g der Mischungen der Phosphorverbindungen werden unter Rühren und Stickstoffdurchfluss zugegeben wobei eine exotherme Reaktion beobachtet wird. Das erhaltene Harz ist gelb verfärbt und fließfähig.

### b) Herstellung von Epoxidharz Probekörpern

100 Teile des phosphormodifizierten Epoxidharzes werden mit einem entsprechenden OH Äquivalent Phenolnovolak (Hydroxidäquivalente 105 g/mol, Schmelzpunkt 85 - 95 °C) gemischt und auf 150 °C aufgeheizt. Hierbei verflüssigen sich die Komponenten. Man rührt langsam bis eine homogene Mischung entsteht und lässt auf 130 °C abkühlen. Nun gibt man 0,03 Teile 2-Phenylimidazol zu und rührt nochmals 5 - 10 min. Im Anschluss wird der Ansatz warm in eine Schale gegossen und für 2 h bei 140 °C und 2 h bei 200 °C ausgehärtet.

### c) Herstellung Epoxidharz Laminat

In 63 Teilen Aceton und 27 Teilen Dowanol^{®} PM werden 100 Teile phosphormodifiziertes Epoxidharz nach b) gegeben und mit der entsprechenden Menge Phenolharz versetzt. Man lässt den Ansatz 30 min rühren und gibt nun 2-Phenylimidazol zu. Danach wird der Ansatz über ein 400 µm Sieb filtriert um überschüssige Harzpartikel zu entfernen. Nun wird ein Glasgewebe (Typ 7628, 203 g/m²) in die Lösung eingetaucht, bis eine vollständige Benetzung des Gewebes stattgefunden hat. Das benetzte Gewebe wird aus der Mischung gezogen und überschüssiges Harz entfernt. Im Anschluss wird das benetze Gewebe stufenweise im Trockenschrank für kurze Zeit bei Temperaturen bis auf 165 °C vorgehärtet und danach in einer Heizpresse ausgehärtet. Der Harzanteil der ausgehärteten Laminate beträgt 30 - 50 Gew.-%. Von dem hergestellten Formkörper, einem Laminat, wird die thermische Ausdehnung nach ASTM E831-06 bestimmt.

### Beispiel 7

Nach der Vorschrift zur Herstellung eines Polymerformkörpers wird mit 100 Gew.-% eines Bisphenol-A Harzes ein Laminat hergestellt. Dieses weist die in der Tabelle angegebenen Werte für den thermischen Ausdehnungskoeffizienten auf.

### Beispiel 8

Reine Ethylen-1,2-bis(ethylphosphinsäure) wird nach Beispiel 2 und anschließendem Waschen des Produkts mit organischen Lösungsmitteln erhalten. Nach der Vorschrift zur Herstellung eines Polymerformkörpers wird mit einer Zusammensetzung aus 90 Gew.-% Bisphenol-A Harz mit Härter und Katalysator und 10 Gew.-% Ethylen-1,2-bis(ethylphosphinsäure) ein Formkörper hergestellt.

### Beispiel 9

Nach der allgemeinen Vorschrift zur Herstellung eines Polymerformkörpers wird mit einer Zusammensetzung aus 90 Gew.-% Bisphenol-A Harz mit Härter und Katalysator und 10 Gew.-% Ethylphosphinsäure (erhalten nach Beispiel 1) ein Formkörper hergestellt.

### Beispiel 10

Nach der allgemeinen Vorschrift zur Herstellung eines Polymerformkörpers wird mit einer Zusammensetzung aus 90 Gew.-% Bisphenol-A Harz mit Härter und Katalysator und 10 Gew.-% der erfindungsgemäßen Mischung aus Ethylen-1,2-bis(ethylphosphinsäure) und Ethylphosphinsäure nach Beispiel 2 ein Formkörper hergestellt.

### Beispiel 11

Nach der allgemeinen Vorschrift zur Herstellung eines Polymerformkörpers wird mit einer Zusammensetzung aus 90 Gew.-% Bisphenol-A Harz mit Härter und Katalysator und 10 Gew.-% der erfindungsgemäßen Mischung aus Ethylen-1,2-bis(ethylphosphinsäure) und Ethylphosphinsäure aus Beispiel 3 ein Formkörper hergestellt.

### Beispiel 12

Nach der allgemeinen Vorschrift zur Herstellung eines Polymerformkörpers wird mit einer Zusammensetzung aus 90 Gew.-% Bisphenol-A Harz mit Härter und Katalysator und 10 Gew.-% der erfindungsgemäßen Mischung aus Ethylen-1,2-bis(ethylphosphinsäure) und Ethylphosphinsäure aus Beispiel 4 ein Formkörper hergestellt.

### Beispiel 13

Nach der allgemeinen Vorschrift zur Herstellung eines Polymerformkörpers wird mit einer Zusammensetzung aus 90 Gew.-% Bisphenol-A Harz mit Härter und Katalysator und 10 Gew.-% der erfindungsgemäßen Mischung aus Ethylen-1,2-bis(ethylphosphinsäure) und Ethylphosphinsäure aus Beispiel 5 ein Formkörper hergestellt.

### Beispiel 14

Nach der allgemeinen Vorschrift zur Herstellung eines Polymerformkörpers wird mit einer Zusammensetzung aus 90 Gew.-% Bisphenol-A Harz mit Härter und Katalysator und 10 Gew.-% der erfindungsgemäßen Mischung aus Ethylen-1,2-bis(ethylphosphinsäure) und Ethylphosphinsäure aus Beispiel 6 ein Formkörper hergestellt.

Die Ergebnisse sind in der nachfolgenden Tabelle wiedergegeben

| Beispiel | Zusammensetzung Polymersystem / Stoffgemisch | Mischung aus Ethylen-1,2-bis (Ethylphosphinsäure) / Ethylphosphinsäure | Thermischer Ausdehnungskoefffizient 0° - 100° [ppm/°C] | | |
|---|---|---|---|---|---|
| | | | Z | X | Y |
| 7 | 100 : 0 | | 69 | 20 | 7 |
| 8 | 90 : 10 | 100 : 0 | 68 | 20 | 7 |
| 9 | 90 : 10 | 0 : 100 | 70 | 21 | 7 |
| 10 | 90 : 10 | 99, 9 : 0,1 (aus Beispiel 2) | 66 | 18 | 5 |
| 11 | 90 : 10 | 98 : 2 (aus Beispiel 3) | 63 | 16 | 5 |
| 12 | 90 : 10 | 90 : 10 (aus Beispiel 4) | 60 | 16 | 5 |

Die Mischungen aus Beispiel 5 und 6 ergeben ebenfalls eine Verkleinerung der Ausdehnungskoeffizienten.

Im Vergleich zum reinen Laminat (Beispiel 7) nehmen die Werte des Laminats mit der erfindungsgemäßen Mischung aus Ethylen-1,2-bis(ethylphosphinsäure) und Ethylphosphinsäure ab, die thermische Ausdehnung ist somit sehr gering. Eine Erhöhung des Ethylphosphinsäureanteils bewirkt eine weitere Verbesserung.

Im Vergleich zum Stand der Technik (Beispiel 7) zeigen die erfindungsgemäßen Mischungen geringere Werte für den thermischen Ausdehnungskoeffizienten, d. h. dass die erfindungsgemäßen Produkte zu einer geringeren Ausdehnung der hergestellten Formkörper führen und somit den Anforderungen an die Maßhaltigkeit genügen.

### Beispiel 15: Herstellung von Polymerformkörpern auf Polyesterbasis:

### a) Herstellung von P-modifiziertem Polyethylenterephthalat

1000 g Dimethylterephthalat werden mit 720 ml Ethylenglykol und 230 mg Mn(OCOCH₃)₄ * 4 H₂O bei Temperaturen von 170 - 220 °C unter einer Stickstoffatmosphäre umgeestert. Nach der Abscheidung des Methanols werden 17,2 g der erfindungsgemäßen Mischung aus Beispiel 4 bei 220 °C dazugegeben und nach Zugabe von 350 mg Sb₂O₃ das Reaktionsgefäß weiter auf 250 °C erwärmt und gleichzeitig ein Vakuum angelegt. Die Polymerisation erfolgt bei 0,2 mm Hg und 287 °C binnen 2 Stunden. Das erhaltene Produkt hat einen Schmelzpunkt von 240 - 244 °C und einen Phosphorgehalt von 0,5 %.

### b) Herstellung von Kunststoff-Formkörpern

Das vorgenannte Polymergranulat wird mit evtl. Additiven vermischt und auf einem Doppelschnecken-Extruder (Typ Leistritz LSM 30/34) bei Temperaturen von 250 bis 290 °C (PET-GV) eingearbeitet. Der homogenisierte Polymerstrang wurde abgezogen, im Wasserbad gekühlt und anschließend granuliert. Nach ausreichender Trocknung wurden die Formmassen auf einer Spritzgießmaschine (Typ Aarburg Allrounder) bei Massetemperaturen von 250 bis 300 °C (PET-GV) zu Prüfkörpern verarbeitet. Die Brandklasse UL 94 und der LOI wurde an Prüfkörpern der Dicke 1,6 mm bestimmt. Formkörper der Dicke 1,6 mm ergeben einen V-0 und einen LOI von 28 %.

## Patentansprüche

1. Mischungen von mindestens einer Diphosphinsäure der Formel (I) 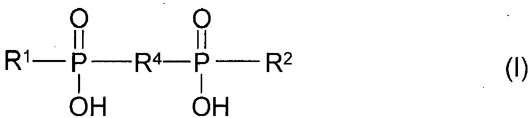 worin
R⁴ Ethylen, Butylen, Hexylen oder Octylen
bedeutet
mit mindestens einer Alkylphosphinsäure der Formel (II) 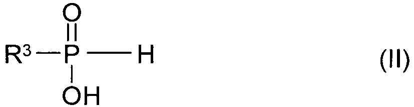 und wobei
R¹, R² und R³ gleich oder verschieden sind und Ethyl, n-Propyl, iso-Propyl, n-Butyl, iso-Butyl, tert.-Butyl, n-Pentyl, iso-Pentyl, n-Hexyl, iso-Hexyl und/oder Phenyl
bedeuten, **dadurch gekennzeichnet, dass** sie 0,1 bis 99,9 Gew.-% Diphosphinsäure der Formel (I) und 99,9 bis 0,1 Gew.-% Alkylphosphinsäure der Formel (II) enthält.

2. Mischungen nach Anspruch 1, **dadurch gekennzeichnet, dass** sie 40 bis 99,9 Gew.-% Diphosphinsäure der Formel (I) und 60 bis 0,1 Gew.-% Alkylphosphinsäure der Formel (II) enthält.

3. Mischungen nach Anspruch 1 oder 2, **dadurch gekennzeichnet, dass** sie 60 bis 99,9 Gew.-% Diphosphinsäure der Formel (I) und 40 bis 0,1 Gew.-% Alkylphosphinsäure der Formel (II) enthält.

4. Mischungen nach einem oder mehreren der Ansprüche 1 bis 3, **dadurch gekennzeichnet, dass** sie 80 bis 99,9 Gew.-% Diphosphinsäure der Formel (I) und 20 bis 0,1 Gew.-% Alkylphosphinsäure der Formel (II) enthält.

5. Mischungen nach einem oder mehreren der Ansprüche 1 bis 4, **dadurch gekennzeichnet, dass** sie 90 bis 99,9 Gew.-% Diphosphinsäure der Formel (I) und 10 bis 0,1 Gew.-% Alkylphosphinsäure der Formel (II) enthält.

6. Mischungen nach einem oder mehreren der Ansprüche 1 bis 5, **dadurch gekennzeichnet, dass** sie 95 bis 99,9 Gew.-% Diphosphinsäure der Formel (I) und 5 bis 0,1 Gew.-% Alkylphosphinsäure der Formel (II) enthält.

7. Mischungen nach einem oder mehreren der Ansprüche 1 bis 6, **dadurch gekennzeichnet, dass** sie 98 bis 99,9 Gew.-% Diphosphinsäure der Formel (I) und 2 bis 0,1 Gew.-% Alkylphosphinsäure der Formel (II) enthält.

8. Mischungen nach einem oder mehreren der Ansprüche 1 bis 7, **dadurch gekennzeichnet, dass** es sich bei der Diphosphinsäure um Ethylen-1,2-bis(ethylphosphinsäure), Ethylen-1,2-bis(propylphosphinsäure), Ethylen-1,2-bis(butylphosphinsäure), Ethylen-1,2-bis(pentylphosphinsäure), Ethylen-1,2-bis(hexylphosphinsäure), Butan-1,2-bis(ethylphosphinsäure), Butylen-1,2-bis(propylphosphinsäure), Butylen -1,2-bis(butylphosphinsäure), Butylen-1,2-bis(pentylphosphinsäure), Butylen -1,2-bis(hexylphosphinsäure), Hexylen-1,2-bis(ethylphosphinsäure), Hexylen -1,2-bis(propylphosphinsäure), Hexylen-1,2-bis(butylphosphinsäure), Hexylen-1,2-bis(pentylphosphinsäure) oder Hexylen-1,2-bis(hexylphosphinsäure) und bei der Alkylphosphinsäure um Ethylphosphinsäure, Propylphosphinsäure, Butylphosphinsäure, Pentylphosphinsäure oder Hexylphosphinsäure handelt.

9. Mischungen aus Ethylen-1,2-bis(ethylphosphinsäure) und Ethylphosphinsäure, enthaltend 98 bis 99,9 Gew.-% Ethylen-1,2-bis(ethylphosphinsäure) und 0,1 bis 2 Gew.-% Ethylphosphinsäure.

10. Mischungen nach einem oder mehreren der Ansprüche 1 bis 9, **dadurch gekennzeichnet, dass** sie weiterhin mindestens einen Synergisten enthalten, wobei es sich dabei um Melem, Melam, Melon, Melaminborat, Melamincyanurat, Melaminphosphat, Dimelaminphosphat, Pentamelamintriphosphat, Trimelamindiphosphat, Tetrakismelamintriphosphat, Hexakismelaminpentaphosphat, Melamindiphosphat, Melamintetraphosphat, Melaminpyrophosphat, Melaminpolyphosphat, Melampolyphosphat, Melempolyphosphat und/oder Melonpolyphosphat; um Aluminiumverbindungen, Magnesiumverbindungen, Zinnverbindungen, Antimonverbindungen, Zinkverbindungen, Siliziumverbindungen, Phosphorverbindungen, Carbodiimide, Phosphazene, Piperazine, Piperazin(pyro)phosphate, (Poly-)isocyanate und /oder Styrol-Acryl-Polymere; um Aluminiumhydroxid, Halloysite, Saphire-Produkte, Böhmit, Nano-Böhmit; um Magnesiumhydroxid; um Antimonoxide; um Zinnoxide; um Zinkoxid, Zinkhydroxid, Zinkoxidhydrat, Zinkcarbonat, Zinkstannat, Zinkhydroxystannat, Zink-Silicat, Zinkphosphat, Zinkborphosphat, Zinkborat und/oder Zinkmolybdat; um Phosphinsäuren und ihre Salze, Phosphonsäuren und ihre Salze und/oder Phosphinoxide; um Carbinylbiscaprolactam; um stickstoffhaltige Verbindungen aus der Gruppe oligomere Ester des Tris(hydroxyethyl)isocyanurats mit aromatischen Polycarbinsäuren, oder Benzoguanamin, Acetoguanamin, Tris(hydroxyethyl)-isocyanurat, Allantoin, Glycouril, Cyanurate, Cyanurate-Epoxidverbindungen, Harnstoffcyanurat, Dicyanamid, Guanidin, Guanidinphosphat und/oder -sulfat handelt.

11. Mischungen nach einem oder mehreren der Ansprüche 1 bis 10, **dadurch gekennzeichnet, dass** sie 99 bis 1 Gew.-% der Mischung aus Diphosphinsäure der Formel (I) und Alkylphosphinsäure der Formel (II) nach mindestens einem der Ansprüche 1 bis 10 und 1 bis 99 Gew.-% Synergist enthalten.

12. Verfahren zur Herstellung der Mischungen nach mindestens einem der Ansprüche 1 bis 9, **dadurch gekennzeichnet, dass** eine Phosphinsäurequelle mit einem Alkin in Anwesenheit eines Initiators umgesetzt wird.

13. Verfahren nach Anspruch 12, **dadurch gekennzeichnet, dass** es sich bei der Phosphinsäurequelle um Ethylphosphinsäure und es sich bei dem Alkin um Acetylen, Methylacetylen, 1-Butin, 1-Hexin, 2-Hexin, 1-Octin, 4-Octin, 1-Butin-4-ol, 2-Butin-1-ol, 3-Butin-1-ol, 5-Hexinl-ol, 1-Octin-3-ol,1-Pentin, Phenylacetylen, Trimethylsilylacetylen und/oder Diphenylacetylen handelt.

14. Verfahren nach Anspruch 12 oder 13, **dadurch gekennzeichnet, dass** es sich bei dem Initiator um einen Radikalinitiator mit einer Stickstoff-Stickstoff- oder einer Sauerstoff-Sauerstoff-Bindung handelt.

15. Verfahren nach Anspruch 14, **dadurch gekennzeichnet, dass** es sich bei dem Radikalinitiator um 2,2'-Azobis(2-amidinopropan)-dihydrochlorid, 2,2'-Azobis(N,N'-dimethylenisobutyramidin)dihydrochlorid, Azobis(isobutyronitril), 4,4'Azobis(4-cyano-pentansäure) und/oder 2,2'Azobis(2-methylbutyronitril oder um Wasserstoffperoxid, Ammoniumperoxodisulfat, Kaliumoperoxodisulfat, Dibenzoylperoxid, Di-tert.-butylperoxid , Peressigsäure, Diisobutyryl-peroxid, Cumol-peroxineodecanoat, tert.-Butyl-peroxineodecanoat, tert.-Butyl-peroxipivalat, tert.-Amyl-peroxipivalat, Dipropyl-peroxidicarbonat, Dibutyl-peroxidicarbonat, Dimyristyl-peroxidicarbonat, Dilauroyl-peroxid, 1,1,3,3-Tetramethylbutyl-peroxi-2-ethylhexanoat, tert.-Amyl-peroxi-2-ethylhexylcarbonat, tert.-Butyl-peroxüsobutyrat, 1,1-Di-(tert.-butylperoxi)-cyclohexan, tert.-Butyl-peroxibenzoat, tert.-Butyl-peroxiacetat, tert.-Butyl-peroxidiethylacetat, tert.-Butyl-peroxiisopropylcarbonat, 2,2-Di-(tert.-butylperoxi)-butan, tert.-Amyl-hydroperoxid und/oder 2,5-Dimethyl-2,5-di-(tert.-butylperoxi)-hexan handelt.

16. Verfahren nach einem oder mehreren der Ansprüche 12 bis 15, **dadurch gekennzeichnet, dass** es sich bei dem Lösungsmittel um gradkettige oder verzweigte Alkane, alkylsubstituierte aromatische Lösungsmittel, mit Wasser nicht oder nur teilweise mischbare Alkohole oder Ether, Wasser und/oder Essigsäure handelt.

17. Verfahren nach Anspruch 16, **dadurch gekennzeichnet, dass** es sich bei dem Alkohol um Methanol, Propanol, i-Butanol und/oder n-Butanol oder Mischungen dieser Alkohole mit Wasser handelt.

18. Verfahren nach einem oder mehreren der Ansprüche 12 bis 17, **dadurch gekennzeichnet, dass** die Reaktionstemperatur 50 bis 150 °C beträgt.

19. Verwendung von Mischungen nach mindestens einem der Ansprüche 1 bis 9 als Zwischenprodukt für weitere Synthesen, als Binder, als Vernetzer und/oder Beschleuniger beim Aushärten von Epoxidharzen, Polyurethanen und ungesättigten Polyesterharzen, als Polymerstabilisatoren, als Pflanzenschutzmittel, als Sequestrierungsmittel, als Mineralöl-Additiv, als Korrosionsschutzmittel, in Wasch- und Reinigungsmittelanwendungen und in Elektronikanwendungen.

20. Verwendung von Mischungen nach mindestens einem der Ansprüche 1 bis 11 als Flammschutzmittel, insbesondere als Flammschutzmittel für Klarlacke und Intumeszenzbeschichtungen, als Flammschutzmittel für Holz und andere cellulosehaltige Produkte, als reaktives und/oder nicht reaktives Flammschutzmittel für Polymere, zur Herstellung von flammgeschützten Polymerformmassen, zur Herstellung von flammgeschützten Polymerformkörpern und/oder zum flammhemmend Ausrüsten von Polyester und Cellulose-Rein- und Mischgeweben durch Imprägnierung sowie als Synergist.

21. Flammgeschützte thermoplastische oder duroplastische Polymerformmasse, Polymer-Formkörper, -Filme, -Fäden und -Fasern enthaltend 0,5 bis 45 Gew.-% Mischungen nach mindestens einem der Ansprüche 1 bis 11, 55 bis 99,5 Gew.-% thermoplastisches oder duroplastisches Polymer oder Mischungen derselben, 0 bis 55 Gew.-% Additive und 0 bis 55 Gew.-% Füllstoff bzw. Verstärkungsmaterialien, wobei die Summe der Komponenten 100 Gew.-% beträgt.

22. Flammgeschützte thermoplastische oder duroplastische Polymerformmasse, Polymer-Formkörper, -Filme, -Fäden und -Fasern, enthaltend 1 bis 30 Gew.-% Mischungen nach mindestens einem der Ansprüche 1 bis 11, 10 bis 95 Gew.-% thermoplastisches oder duroplastisches Polymer oder Mischungen derselben, 2 bis 30 Gew.-% Additive und 2 bis 30 Gew.-% Füllstoff bzw. Verstärkungsmaterialien, wobei die Summe der Komponenten 100 Gew.-% beträgt.

## Claims

1. A mixture of at least one diphosphinic acid of the formula (I) 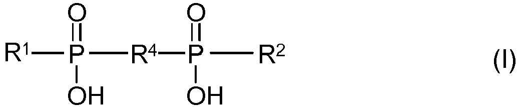 in which
R⁴ is ethylene, butylene, hexylene or octylene
with at least one alkylphosphinic acid of the formula (II) 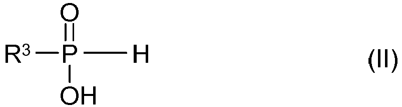 and wherein
R¹, R² and R³ are the same or different and are each ethyl, n-propyl, isopropyl, n-butyl, isobutyl, tert-butyl, n-pentyl, isopentyl, n-hexyl, isohexyl and/or phenyl,
which comprises 0.1 to 99.9% by weight of diphosphinic acid of the formula (I) and 99.9 to 0.1 % by weight of alkylphosphinic acid of the formula (II).

2. The mixture as claimed in claim 1, which comprises 40 to 99.9% by weight of diphosphinic acid of the formula (I) and 60 to 0.1% by weight of alkylphosphinic acid of the formula (II).

3. The mixture as claimed in claim 1 or 2, which comprises 60 to 99.9% by weight of diphosphinic acid of the formula (I) and 40 to 0.1% by weight of alkylphosphinic acid of the formula (II).

4. The mixture as claimed in one or more of claims 1 to 3, which comprises 80 to 99.9% by weight of diphosphinic acid of the formula (I) and 20 to 0.1 % by weight of alkylphosphinic acid of the formula (II).

5. The mixture as claimed in one or more of claims 1 to 4, which comprises 90 to 99.9% by weight of diphosphinic acid of the formula (I) and 10 to 0.1% by weight of alkylphosphinic acid of the formula (II).

6. The mixture as claimed in one or more of claims 1 to 5, which comprises 95 to 99.9% by weight of diphosphinic acid of the formula (I) and 5 to 0.1% by weight of alkylphosphinic acid of the formula (II).

7. The mixture as claimed in one or more of claims 1 to 6, which comprises 98 to 99.9% by weight of diphosphinic acid of the formula (I) and 2 to 0.1% by weight of alkylphosphinic acid of the formula (II).

8. The mixture as claimed in one or more of claims 1 to 7, wherein the diphosphinic acid is ethylene-1,2-bis(ethylphosphinic acid), ethylene-1,2-bis(propylphosphinic acid), ethylene-1,2-bis(butylphosphinic acid), ethylene-1,2-bis(pentylphosphinic acid), ethylene-1,2-bis(hexylphosphinic acid), butane-1,2-bis(ethylphosphinic acid), butylene-1,2-bis(propylphosphinic acid), butylene-1,2-bis(butylphosphinic acid), butylene-1,2-bis(pentylphosphinic acid), butylene-1,2-bis(hexylphosphinic acid), hexylene-1,2-bis(ethylphosphinic acid), hexylene-1,2-bis(propylphosphinic acid), hexylene-1,2-bis(butylphosphinic acid), hexylene-1,2-bis(pentylphosphinic acid) or hexylene-1,2-bis(hexylphosphinic acid), and the alkylphosphinic acid is ethylphosphinic acid, propylphosphinic acid, butylphosphinic acid, pentylphosphinic acid or hexylphosphinic acid.

9. A mixture of ethylene-1,2-bis(ethylphosphinic acid) and ethylphosphinic acid, comprising 98 to 99.9% by weight of ethylene-1,2-bis(ethylphosphinic acid) and 0.1 to 2% by weight of ethylphosphinic acid.

10. The mixture as claimed in one or more of claims 1 to 9, which further comprises at least one synergist, the latter being melem, melam, melon, melamine borate, melamine cyanurate, melamine phosphate, dimelamine phosphate, pentamelamine triphosphate, trimelamine diphosphate, tetrakismelamine triphosphate, hexakismelamine pentaphosphate, melamine diphosphate, melamine tetraphosphate, melamine pyrophosphate, melamine polyphosphate, melam polyphosphate, melem polyphosphate and/or melon polyphosphate; aluminum compounds, magnesium compounds, tin compounds, antimony compounds, zinc compounds, silicon compounds, phosphorus compounds, carbodiimides, phosphazenes, piperazines, piperazine (pyro)phosphates, (poly)isocyanates and/or styrene-acrylic polymers; aluminum hydroxide, halloysites, sapphire products, boehmite, nanoboehmite; magnesium hydroxide; antimony oxides; tin oxides; zinc oxide, zinc hydroxide, zinc oxide hydrate, zinc carbonate, zinc stannate, zinc hydroxystannate, zinc silicate, zinc phosphate, zinc borophosphate, zinc borate and/or zinc molybdate; phosphinic acids and salts thereof, phosphonic acids and salts thereof and/or phosphine oxides; carbinylbiscaprolactam; nitrogen compounds from the group of oligomeric esters of tris(hydroxyethyl) isocyanurate with aromatic polycarbinic acids, or benzoguanamine, acetoguanamine, tris(hydroxyethyl) isocyanurate, allantoin, glycoluril, cyanurates, cyanurate-epoxide compounds, urea cyanurate, dicyanamide, guanidine, guanidine phosphate and/or sulfate.

11. The mixture as claimed in one or more of claims 1 to 10, which comprises 99 to 1% by weight of the mixture of diphosphinic acid of the formula (I) and alkylphosphinic acid of the formula (II) as claimed in at least one of claims 1 to 10 and 1 to 99% by weight of synergist.

12. A process for preparing the mixtures as claimed in at least one of claims 1 to 9, wherein a phosphinic acid source is reacted with an alkyne in the presence of an initiator.

13. The process as claimed in claim 12, wherein the phosphinic acid source is ethylphosphinic acid and the alkyne is acetylene, methylacetylene, 1-butyne, 1-hexyne, 2-hexyne, 1-octyne, 4-octyne, 1-butyn-4-ol, 2-butyn-1-ol, 3-butyn-1-ol, 5-hexyn-1-ol, 1-octyn-3-ol, 1-pentyne, phenylacetylene, trimethylsilylacetylene and/or diphenylacetylene.

14. The process as claimed in claim 12 or 13, wherein the initiator is a free-radical initiator having a nitrogen-nitrogen or an oxygen-oxygen bond.

15. The process as claimed in claim 14, wherein the free-radical initiator is 2,2'-azobis(2-amidinopropane) dihydrochloride, 2,2'-azobis(N,N'-dimethyleneisobutyramidine) dihydrochloride, azobis(isobutyronitrile), 4,4'-azobis(4-cyanopentanoic acid) and/or 2,2'-azobis(2-methylbutyronitrile) or hydrogen peroxide, ammonium peroxodisulfate, potassium peroxodisulfate, dibenzoyl peroxide, di-tert-butyl peroxide, peracetic acid, diisobutyryl peroxide, cumene peroxyneodecanoate, tert-butyl peroxyneodecanoate, tert-butyl peroxypivalate, tert-amyl peroxypivalate, dipropyl peroxydicarbonate, dibutyl peroxydicarbonate, dimyristyl peroxydicarbonate, dilauroyl peroxide, 1,1,3,3-tetramethylbutyl peroxy-2-ethylhexanoate, tert-amyl peroxy-2-ethylhexylcarbonate, tert-butyl peroxyisobutyrate, 1,1-di(tert-butylperoxy)cyclohexane, tert-butyl peroxybenzoate, tert-butyl peroxyacetate, tert-butyl peroxydiethylacetate, tert-butyl peroxyisopropylcarbonate, 2,2-di(tert-butylperoxy)butane, tert-amyl hydroperoxide and/or 2,5-dimethyl-2,5-di(tert-butylperoxy)hexane.

16. The process as claimed in one or more of claims 12 to 15, wherein the solvent comprises straight-chain or branched alkanes, alkyl-substituted aromatic solvents, water-immiscible or only partly water-miscible alcohols or ethers, water and/or acetic acid.

17. The process as claimed in claim 16, wherein the alcohol is methanol, propanol, i-butanol and/or n-butanol or comprises mixtures of these alcohols with water.

18. The process as claimed in one or more of claims 12 to 17, wherein the reaction temperature is 50 to 150°C.

19. The use of mixtures as claimed in at least one of claims 1 to 9 as an intermediate for further syntheses, as a binder, as a crosslinker and/or accelerator in the curing of epoxy resins, polyurethanes and unsaturated polyester resins, as polymer stabilizers, as crop protection compositions, as sequestrants, as a mineral oil additive, as an anticorrosive, in washing and cleaning composition applications and in electronics applications.

20. The use of mixtures as claimed in at least one of claims 1 to 11 as a flame retardant, especially as a flame retardant for clearcoats and intumescent coatings, as a flame retardant for wood and other cellulosic products, as a reactive and/or nonreactive flame retardant for polymers, for production of flame-retardant polymer molding compositions, for production of flame-retardant polymer moldings and/or for rendering polyester and pure and blended cellulose fabrics flame-retardant by impregnation, and as a synergist.

21. A flame-retardant thermoplastic or thermoset polymer molding composition or polymer molding, film, filament or fiber comprising 0.5 to 45% by weight of mixtures as claimed in at least one of claims 1 to 11, 55 to 99.5% by weight of thermoplastic or thermoset polymer or mixtures thereof, 0 to 55% by weight of additives and 0 to 55% by weight of filler or reinforcing materials, where the sum of the components is 100% by weight.

22. A flame-retardant thermoplastic or thermoset polymer molding composition or polymer molding, film, filament or fiber comprising 1 to 30% by weight of mixtures as claimed in at least one of claims 1 to 11, 10 to 95% by weight of thermoplastic or thermoset polymer or mixtures thereof, 2 to 30% by weight of additives and 2 to 30% by weight of filler or reinforcing materials, where the sum of the components is 100% by weight.

## Revendications

1. Mélanges d'au moins un acide diphosphinique de formule (I) 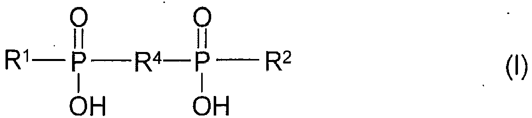 dans laquelle
R⁴ signifie éthylène, butylène, hexylène ou octylène
avec au moins un acide alkylphosphinique de formule (II) 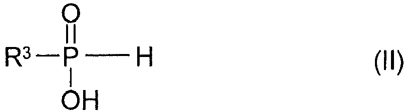 et dans lesquelles
R¹, R² et R³ sont identiques ou différents et signifient éthyle, n-propyle, iso-propyle, n-butyle, iso-butyle, tert-butyle, n-pentyle, iso-pentyle, n-hexyle, isohexyle et/ou phényle,
**caractérisés en ce qu'**ils contiennent 0,1 à 99,9% en poids d'acide diphosphinique de formule (I) et 99,9 à 0,1% en poids d'acide alkylphosphinique de formule (II).

2. Mélanges selon la revendication 1, **caractérisés en ce qu'**ils contiennent 40 à 99,9% en poids d'acide diphosphinique de formule (I) et 60 à 0,1% en poids d'acide alkylphosphinique de formule (II).

3. Mélanges selon la revendication 1 ou 2, **caractérisés en ce qu'**ils contiennent 60 à 99,9% en poids d'acide diphosphinique de formule (I) et 40 à 0,1% en poids d'acide alkylphosphinique de formule (II).

4. Mélanges selon l'une ou plusieurs des revendications 1 à 3, **caractérisés en ce qu'**ils contiennent 80 à 99,9% en poids d'acide diphosphinique de formule (I) et 20 à 0,1% en poids d'acide alkylphosphinique de formule (II).

5. Mélanges selon l'une ou plusieurs des revendications 1 à 4, **caractérisés en ce qu'**ils contiennent 90 à 99,9% en poids d'acide diphosphinique de formule (I) et 10 à 0,1% en poids d'acide alkylphosphinique de formule (II).

6. Mélanges selon l'une ou plusieurs des revendications 1 à 5, **caractérisés en ce qu'**ils contiennent 95 à 99,9% en poids d'acide diphosphinique de formule (I) et 5 à 0,1% en poids d'acide alkylphosphinique de formule (II).

7. Mélanges selon l'une ou plusieurs des revendications 1 à 6, **caractérisés en ce qu'**ils contiennent 98 à 99,9% en poids d'acide diphosphinique de formule (I) et 2 à 0,1% en poids d'acide alkylphosphinique de formule (II).

8. Mélanges selon l'une ou plusieurs des revendications 1 à 7, **caractérisés en ce qu'**il s'agit, pour l'acide diphosphinique, d'éthylène-1,2-bis(acide éthylphosphinique), d'éthylène-1,2-bis(acide propylphosphinique), d'éthylène-1,2-bis(acide butylphosphinique), d'éthylène-1,2-bis(acide pentylphosphinique), d'éthylène-1,2-bis(acide hexylphosphinique), de butylène-1,2-bis(acide éthylphosphinique), de butylène-1,2-bis(acide propylphosphinique), de butylène-1,2-bis(acide butylphosphinique), de butylène-1,2-bis(acide pentylphosphinique), de butylène-1,2-bis(acide hexylphosphinique), d'hexylène-1,2-bis(acide éthylphosphinique), d'hexylène-1,2-bis(acide propylphosphinique), d'hexylène-1,2-bis(acide butylphosphinique), d'hexylène-1,2-bis(acide pentylphosphinique) ou d'hexylène-1,2-bis(acide hexylphosphinique) et, pour l'acide alkylphosphinique, d'acide éthylphosphinique, d'acide propylphosphinique, d'acide butylphosphinique, d'acide pentylphosphinique ou d'acide hexylphosphinique.

9. Mélanges d'éthylène-1,2-bis(acide éthylphosphinique) et d'acide éthylphosphinique, contenant 98 à 99,9% en poids d'éthylène-1,2-bis(acide éthylphosphinique) et 0,1 à 2% en poids d'acide éthylphosphinique.

10. Mélanges selon l'une ou plusieurs des revendications 1 à 9, **caractérisés en ce qu'**ils contiennent en outre au moins un synergiste, pour lequel il s'agit de mélem, de mélam, de mélon, de borate de mélamine, de cyanurate de mélamine, de phosphate de mélamine, de phosphate de dimélamine, de triphosphate de pentamélamine, de diphosphate de trimélamine, de triphosphate de tétrakismélamine, de pentaphosphate d'hexakismélamine, de diphosphate de mélamine, de tétraphosphate de mélamine, de pyrophosphate de mélamine, de polyphosphate de mélamine, de polyphosphate de mélam, de polyphosphate de mélem et/ou de polyphosphate de mélon ; de composés à base d'aluminium, de composés à base de magnésium, de composés à base d'étain, de composés à base d'antimoine, de composés à base de zinc, de composés à base de silicium, de composés à base de phosphore, de carbodiimides, de phosphazènes, de pipérazines, de (pyro)phosphates de pipérazine, de (poly)isocyanates et/ou de polymères de styrène-acryle ; d'hydroxyde d'aluminium, d'halloysite, de produits de type saphir, de boehmite, de nano-boehmite ; d'hydroxyde de magnésium ; d'oxydes d'antimoine ; d'oxydes d'étain ; d'oxyde de zinc, d'hydroxyde de zinc, d'oxyde de zinc hydraté, de carbonate de zinc, de stannate de zinc, d'hydroxystannate de zinc, de silicate de zinc, de phosphate de zinc, de borophosphate de zinc, de borate de zinc et/ou de molybdate de zinc ; d'acides phosphoniques et de leurs sels, d'acides phosphiniques et de leurs sels et/ou d'oxydes de phosphine ; de carbinylbiscaprolactame ; de composés azotés du groupe des esters oligomères d'isocyanurate de tris(hydroxyéthyle) avec des acides polycarbiniques aromatiques, ou de benzoguanamine, d'acétoguanamine, d'isocyanurate de tris(hydroxyéthyle), d'allantoïne, de glycolurile, de cyanurates, de composés de type cyanurate-époxyde, de cyanurate d'urée, de dicyanamide, de guanidine, de phosphate et/ou de sulfate de guanidine.

11. Mélanges selon l'une ou plusieurs des revendications 1 à 10, **caractérisés en ce qu'**ils contiennent 99 à 1% en poids du mélange d'acide diphosphinique de formule (1) et d'acide alkylphosphinique de formule (II) selon au moins l'une quelconque des revendications 1 à 10 et 1 à 99% en poids de synergiste.

12. Procédé pour la préparation des mélanges selon au moins l'une quelconque des revendications 1 à 9, **caractérisé en ce qu'**une source d'acide phosphinique est transformée avec un alcyne en présence d'un initiateur.

13. Procédé selon la revendication 12, **caractérisé en ce qu'**il s'agit, pour la source d'acide phosphinique, d'acide éthylphosphinique et, pour l'alcyne, d'acétylène, de méthylacétylène, de 1-butyne, de 1-hexyne, de 2-hexyne, de 1-octyne, de 4-octyne, de 1-butyn-4-ol, de 2-butyn-1-ol, de 3-butyn-1-ol, de 5-hexyn-1-ol, de 1-octyn-3-ol, de 1-pentyne, de phénylacétylène, de triméthylsilylacétylène et/ou diphénylacétylène.

14. Procédé selon la revendication 12 ou 13, **caractérisé en ce qu'**il s'agit, pour l'initiateur, d'un initiateur de radicaux présentant une liaison azote-azote ou une liaison oxygène-azote.

15. Procédé selon la revendication 14, **caractérisé en ce qu'**il s'agit, pour l'initiateur radicalaire, de dichlorhydrate de 2,2'-azo-bis(2-amidinopropane), de dichlorhydrate de 2,2'-azo-bis(N,N'-diméthylène-isobutyramidine), d'azo-bis(isobutyronitrile), de 4,4'-azo-bis(acide 4-cyanopentanoïque) et/ou de 2,2'-azo-bis(2-méthylbutyronitrile) ou de peroxyde d'hydrogène, de peroxodisulfate d'ammonium, de peroxodisulfate de potassium, de peroxyde de dibenzoyle, de peroxyde de di-tert-butyle, d'acide peracétique, de peroxyde de diisobutyryle, de peroxynéodécanoate de cumène, de peroxynéodécanoate de tert-butyle, de peroxypivalate de tert-butyle, de peroxypivalate de tert-amyle, de peroxydicarbonate de dipropyle, de peroxydicarbonate de dibutyle, de peroxydicarbonate de dimyristyle, de peroxyde de dilauroyle, de peroxy-2-éthylhexanoate de 1,1,3,3-tétraméthylbutyle, de peroxy-2-éthylhexylcarbonate de tert-amyle, de peroxyisobutyrate de tert-butyle, de 1,1-di-(tert-butylperoxy)-cyclohexane, de peroxybenzoate de tert-butyle, de peroxyacétate de tert-butyle, de peroxydiéthylacétate de tert-butyle, de peroxyisopropylcarbonate de tert-butyle, de 2,2-di-(tert-butylperoxy)-butane, d'hydroperoxyde de tert-amyle et/ou de 2,5-diméthyl-2,5-di-(tert-butylperoxy)-hexane.

16. Procédé selon l'une ou plusieurs des revendications 12 à 15, **caractérisé en ce qu'**il s'agit, pour le solvant, d'alcanes linéaires ou ramifiés, de solvants aromatiques substitués par alkyle, d'alcools ou d'éthers non miscibles ou seulement partiellement miscibles à l'eau, d'eau et/ou d'acide acétique.

17. Procédé selon la revendication 16, **caractérisé en ce qu'**il s'agit, pour l'alcool, de méthanol, de propanol, d'i-butanol et/ou de n-butanol ou de mélanges de ces alcools avec de l'eau.

18. Procédé selon l'une ou plusieurs des revendications 12 à 17, **caractérisé en ce que** la température de réaction est de 50°C à 150°C.

19. Utilisation de mélanges selon au moins l'une quelconque des revendications 1 à 9 comme produit intermédiaire pour d'autres synthèses, comme liant, comme réticulant et/ou accélérateur lors du durcissement de résines époxydes, de polyuréthanes et de résines de polyester insaturées, comme stabilisants de polymères, comme agents de phytoprotection, comme agents de séquestration, comme additif d'huile minérale, comme agent de protection contre la corrosion, dans des utilisations d'agents de lavage et de nettoyage et dans des applications électroniques.

20. Utilisation de mélanges selon au moins l'une quelconque des revendications 1 à 11 comme agent ignifuge, en particulier comme agent ignifuge pour des laques claires et des revêtements intumescents, comme agent ignifuge pour bois et d'autres produits contenant de la cellulose, comme agent ignifuge réactif et/ou non réactif pour des polymères, pour la préparation de masses de moulage polymères ignifugées, pour la préparation de corps façonnés polymères ignifugés et/ou pour l'apprêt inhibant les flammes de polyesters et de tissus en cellulose pure et de tissus mixtes à base de cellulose par imprégnation ainsi que comme synergiste.

21. Masse de moulage polymère, corps façonnés, films, fils et/ou fibres polymères thermoplastiques ou thermodurcissables, ignifugés, contenant 0,5 à 45% en poids de mélanges selon au moins l'une quelconque des revendications 1 à 11, 55 à 99,5% en poids de polymère thermoplastique ou thermodurcissable ou de mélanges de ceux-ci, 0 à 55% en poids d'additifs et 0 à 55% en poids de charge ou de matériaux de renforcement, la somme des composants valant 100% en poids.

22. Masse de moulage polymère, corps façonnés, films, fils et/ou fibres polymères thermoplastiques ou thermodurcissables, ignifugés, contenant 1 à 30% en poids de mélanges selon au moins l'une quelconque des revendications 1 à 11, 10 à 95% en poids de polymère thermoplastique ou thermodurcissable ou de mélanges de ceux-ci, 2 à 30% en poids d'additifs et 2 à 30% en poids de charge ou de matériaux de renforcement, la somme des composants valant 100% en poids.
